# EUROPÄISCHE PATENTANMELDUNG

(11) **EP 4 786 274 A1**
(43) Veröffentlichungstag der Anmeldung: **05.08.2026**
(21) Anmeldenummer: 25155352.5
(22) Anmeldetag: 31.01.2025
(51) Int. Cl.: B60P 3/12

(54) **VORRICHTUNG FÜR EINEN UNTERFAHRLIFT UND VERFAHREN ZUM BETRIEB EINES UNTERFAHRLIFTS**

(71) Anmelder: Rotzler Holding GmbH + Co. KG, 79585 Steinen (DE)
(72) Erfinder: ROTZLER, Jürgen, 79585 Steinen (DE); BEYERSDORFF, Stefan, 79585 Steinen (DE); ILCHMANN, Thomas, 79585 Steinen (DE)
(74) Vertreter: Karzel, Philipp

(57) **Zusammenfassung**

Die Erfindung betrifft eine Vorrichtung (1) für einen Unterfahrlift. Der Unterfahrlift (20) ist zur Anordnung an einem Bergefahrzeug (30) und zum Anheben mindestens einer Achse (41) eines Havaristenfahrzeugs (40) vorgesehen. Die Vorrichtung (1) ist zur Ermittlung eines ersten Belastungswerts (F_{Lv}) und eines zweiten Belastungswerts (a_{Lh}) bei einer Belastung des Unterfahrlifts (20) aufgrund des Anhebens der mindestens einen Achse (41) des Havaristenfahrzeugs (40) ausgelegt. Die Vorrichtung (1) umfasst eine Steuereinheit (2). Die Steuereinheit (2) erstellt basierend auf dem ersten Belastungswert (F_{Lv}) und dem zweiten Belastungswert (a_{Lh}) eine Information für die Bergung des Havaristenfahrzeugs (40).

## Beschreibung

Die Erfindung betrifft eine Vorrichtung für einen Unterfahrlift. Ein Unterfahrlift ist zur Anordnung an einem Bergefahrzeug und zum Anheben mindestens einer Achse eines Havaristenfahrzeugs vorgesehen. Ein Unterfahrlift wird umgangssprachlich auch mit dem englischen Wort "Underlift" bezeichnet. Typischerweise weist ein Unterfahrlift mindestens eine Kraftmaschine zum Anheben der mindestens einen Achse des Havaristenfahrzeugs auf. Der an dem Bergefahrzeug angeordnete Unterfahrlift greift zum Abschleppen eines liegen gebliebenen Havaristenfahrzeugs unter das Havaristenfahrzeug und wird mittels der Kraftmaschine so bewegt, dass mindestens eine Achse des Havaristenfahrzeugs angehoben wird. Insbesondere handelt es sich hierbei um die Lenkachse. Durch das Anheben der mindestens einen Achse des Havaristenfahrzeugs kann das Havaristenfahrzeug abgeschleppt werden, ohne dass es von einer Person gelenkt werden müsste. Der Bergezug bestehend aus dem Bergefahrzeug und dem Havaristenfahrzeug lässt sich aufgrund der angehobenen mindestens einen Achse des Havaristenfahrzeugs besser manövrieren, da die Lenkeigenschaften aufgrund der geringeren Seitenkräfte aufgrund der angehobenen mindestens einen Achse des Havaristenfahrzeugs besser sind.

In der Praxis stellen sich vor dem Bergen eines Havaristenfahrzeugs durch ein Bergefahrzeug oft zahlreiche Fragen. Beispielsweise sollte geklärt sein, ob das Bergen, insbesondere Abschleppen des Havaristenfahrzeugs durch das Bergefahrzeug hinsichtlich der Strukturfestigkeit des Unterfahrlifts und hinsichtlich der zulässigen Achslast des Bergefahrzeugs zulässig und sicher ist. Ein Unterfahrlift hat in der Regel Überlastorgane. Es kann jedoch von Vorteil sein zu wissen, wie hoch die Belastung tatsächlich ist. Dies gilt insbesondere, da die Überlastorgane nicht alle Situationen abdecken können und es auch um die Stabilität des Bergefahrzeugs geht. Außerdem ist von Interesse, mit welcher maximalen Geschwindigkeit der Bergezug fahren darf, damit ein sicheres Manövrieren und Anhalten gewährleistet ist.

Der Erfindung liegt die Aufgabe zugrunde, eine Vorrichtung für einen Unterfahrlift anzugeben, mit der Entscheidungen hinsichtlich der Zulässigkeit des Bergevorgangs eines Havaristenfahrzeugs mit dem auf einem Bergefahrzeug angeordneten Unterfahrlift oder über die Maximalgeschwindigkeit, mit der der Bergevorgang erfolgen sollte, getroffen werden können. Diese Aufgabe wird durch eine Vorrichtung für einen Unterfahrlift mit den Merkmalen des Anspruchs 1 gelöst.

Eine weitere Aufgabe der Erfindung liegt darin, ein Verfahren zum Betrieb eines an einem Bergefahrzeug angeordneten Unterfahrlifts anzugeben, mit dem entschieden werden kann, ob der Bergevorgang zulässig ist und/oder mit welcher Maximalgeschwindigkeit der Bergevorgang erfolgen kann.

Diese Aufgabe wird durch ein Verfahren mit den Merkmalen des Anspruchs 14 gelöst.

Die erfindungsgemäße Vorrichtung für einen Unterfahrlift ist zur Ermittlung eines ersten Belastungswerts und eines zweiten Belastungswerts bei einer Belastung des Unterfahrlifts aufgrund des Anhebens der mindestens einen Achse des Havaristenfahrzeugs ausgelegt. Die Vorrichtung umfasst eine Steuereinheit. Die Steuereinheit erstellt basierend auf dem ersten Belastungswert und dem zweiten Belastungswert eine Information für die Bergung des Havaristenfahrzeugs. Diese Information kann dann dazu genutzt werden, festzustellen, ob das Bergefahrzeug zur Bergung des Havaristenfahrzeugs geeignet ist, insbesondere hinsichtlich der zulässigen Achslast des Bergefahrzeugs. Außerdem kann die Information dazu genutzt werden, ob die Strukturfestigkeit des Unterfahrlifts ausreicht, um das Havaristenfahrzeug zu bergen. Anhand von Tabellen, insbesondere anhand einer Last-Geschwindigkeits-Matrix des Bergefahrzeugs, kann die maximal zulässige Geschwindigkeit für ein sicheres Abschleppen des Havaristenfahrzeugs ermittelt werden.

Insbesondere ist die Information ein Signal, das die Steuereinheit generiert. Insbesondere ist das Signal zur Weiterverarbeitung durch ein weiteres Bauteil der Vorrichtung und/oder des Unterfahrlifts und/oder des Bergefahrzeugs vorgesehen. Insbesondere ist das Signal ein elektrisches, insbesondere ein elektromagnetisches Signal. Insbesondere ist das Signal ein digitales Signal. Insbesondere enthält die Information den ersten Belastungswert und den zweiten Belastungswert selbst.

Zweckmäßig ist der erste Belastungswert die durch das Havaristenfahrzeug auf den Unterfahrlift wirkende Last, insbesondere Kraft. Diese durch das Havaristenfahrzeug auf den Unterfahrlift wirkende Last ist relevant zur Beantwortung der Frage, ob das Bergefahrzeug und/oder der Unterfahrlift zur Bergung des Havaristenfahrzeugs, insbesondere in einer gegebenen Situation vor Ort, geeignet ist. Die durch das Havaristenfahrzeug auf den Unterfahrlift wirkende Last, insbesondere Kraft, wirkt in vollem Maße als Achslast auf das Bergefahrzeug, insbesondere auf die Hinterachse des Bergefahrzeugs. Auch ob die Strukturfestigkeit des Unterfahrlifts ausreichend groß ist und ob die Anbindung am Begefahrzeug stabil genug ist, hängt davon ab, wie groß der erste Belastungswert ist.

Zweckmäßig ist der zweite Belastungswert ein Hebelarm, mit dem die durch das Havaristenfahrzeug am Unterfahrlift anliegende Last auf zumindest einen Teil des Unterfahrlifts wirkt. Mit Hebelarm ist insbesondere die Länge des Hebelarms in Horizontalrichtung bezeichnet. Je größer der Hebelarm ist, mit dem die durch das Havaristenfahrzeug am Unterfahrlift anliegende Last auf zumindest einen Teil des Unterfahrlifts wirkt, desto größer ist das Drehmoment, mit dem die Last auf den Teil des Unterfahrlifts, insbesondere auf das Bergefahrzeug, wirkt.

Insbesondere bewirkt die durch das Havaristenfahrzeug auf den Unterfahrlift, insbesondere über einen Hebelarm, wirkende Last eine Kraft auf die Lenkachse des Bergefahrzeugs in Richtung entgegen der Gewichtskraft. Dadurch müssen die anderen Achsen des Bergefahrzeug, insbesondere die Hinterachse, eine größere Last tragen, insbesondere eine größere Kraft aufnehmen.

Aufgrund des Drehmoments, mit dem die Last auf den Teil des Unterfahrlifts, insbesondere auf das Bergefahrzeug, wirkt, kann der Bodenkontakt zwischen dem Bergefahrzeug, insbesondere den Reifen des Bergefahrzeugs, insbesondere an der Lenkachse, und dem Bodenbelag verringert und/oder vollständig aufgehoben sein. Aufgrund des Drehmoments, mit dem die Last auf den Teil des Unterfahrlifts, insbesondere auf das Bergefahrzeug, wirkt, kann insbesondere die Haftreibung zwischen dem Bergefahrzeug, insbesondere den Reifen des Bergefahrzeugs, insbesondere an der Lenkachse, verringert und/oder vollständig aufgehoben sein. Insbesondere bei höheren Geschwindigkeiten kann dadurch die Lenk- und Manövrierfähigkeit des Bergefahrzeugs, insbesondere des Bergezugs, beeinträchtigt sein. Aus einer Last-Geschwindigkeits-Matrix für das Bergefahrzeug lässt sich eine Maximalgeschwindigkeit für den Bergevorgang ermitteln, bei der ein sicheres Lenken und Manövrieren des Bergefahrzeugs, insbesondere des Bergezugs, noch möglich ist.

Bei einem längeren Hebelarm wird die Lenkachse des Bergefahrzeugs in größerem Maß entlastet und die Lenkfähigkeit entsprechend in größerem Maß beeinträchtigt. In analoger Weise wird die in der Regel hintere Achse des Bergefahrzeugs bei einem längeren Hebelarm stärker belastet. Auch die Strukturfestigkeit des Unterfahrlifts muss bei einem längeren Hebelarm größer sein.

Insbesondere umfasst der Unterfahrlift mehrere relativ zueinander bewegliche Bauteile. Vorteilhaft werden der erste Belastungswert und der zweite Belastungswert aus mindestens zwei inneren Kräften des Unterfahrlifts und aus mindestens zwei Kenngrößen der geometrischen Anordnung der mehreren Bauteile und/oder des Bergefahrzeugs zueinander in der Steuereinheit indirekt ermittelt, insbesondere berechnet. Innere Kräfte des Unterfahrlifts sind insbesondere Kräfte, die zur Bewegung der beweglichen Bauteile des Unterfahrlifts von dem Unterfahrlift selbst aufgebracht werden. Insbesondere sind innere Kräfte von externen Kräften zu unterscheiden. Externe Kräfte sind Kräfte, die beispielsweise durch Gewicht, insbesondere durch die Aufliegelast des Havaristenfahrzeugs, verursacht werden. Insbesondere weist der Unterfahrlift mindestens eine Kraftmaschine zum Anheben der mindestens einen Achse des Havaristenfahrzeugs auf. Die mindestens zwei inneren Kräfte des Unterfahrlifts werden insbesondere durch die mindestens eine Kraftmaschine des Unterfahrlifts, insbesondere durch mehrere Kraftmaschinen des Unterfahrlifts, aufgebracht. Die mindestens zwei Kenngrößen der geometrischen Anordnung der mehreren Bauteile zueinander, können beispielsweise Winkel zwischen den mehreren Bauteilen und/oder die momentane Länge einzelner der mehreren, insbesondere teleskopierbaren, Bauteile sein. Insbesondere können die mindestens zwei Kenngrößen ein Winkel zwischen dem Bergefahrzeug und einem der mehreren Bauteile und ein Winkel zwischen der mindestens einen Kraftmaschine und dem Bergefahrzeug sein. Bevorzugt sind die mindestens zwei Kenngrößen die Längen von mindestens zwei Kraftmaschinen, insbesondere von mindestens zwei als Zylinder, insbesondere als Hydraulikzylinder ausgebildeten Kraftmaschinen. Insbesondere ist mindestens eines der mehreren Bauteile ausfahrbar. Insbesondere sind zumindest zwei der mehreren Bauteile durch eine Gelenkverbindung miteinander verbunden. Insbesondere ist der Winkel dieser beiden über eine Gelenkverbindung miteinander verbundenen Bauteile der mehreren Bauteile eine der mindestens zwei Kenngrößen der geometrischen Anordnung der mehreren Bauteile zueinander. Insbesondere können der erste Belastungswert und der zweite Belastungswert mit Kenntnis der mindestens zwei inneren Kräfte und der mindestens zwei Kenngrößen der geometrischen Anordnung durch Lösen eines Gleichungssystems berechnet werden. Dies geschieht insbesondere in der Steuereinheit. Dadurch ist es möglich, den ersten Belastungswert und den zweiten Belastungswert indirekt zu ermitteln. Eine direkte Messung des ersten Belastungswerts und des zweiten Belastungswerts ist hierfür nicht erforderlich. Dies ermöglicht es, auf kostengünstige Weise den ersten und den zweiten Belastungswert zu ermitteln. Dadurch kann eine aufwendige direkte Messung des ersten Belastungswerts und des zweiten Belastungswerts vermieden werden.

Vorteilhaft weist die Vorrichtung mindestens zwei Kraftermittlungssensoren zur Ermittlung der mindestens zwei inneren Kräfte des Unterfahrlifts auf. Insbesondere weist die Vorrichtung mindestens zwei Geometriesensoren zur Ermittlung der mindestens zwei Kenngrößen der geometrischen Anordnung der mehreren Bauteile zueinander und/oder zu dem Bergefahrzeug auf. Zweckmäßig werden die mindestens zwei inneren Kräfte und die mindestens zwei Kenngrößen der geometrischen Anordnung bei der Ermittlung des ersten Belastungswerts und des zweiten Belastungswerts verwendet. Dadurch ist es möglich, auf einfache Weise den ersten Belastungswert und den zweiten Belastungswert aus den mittels der mindestens zwei Kraftermittlungssensoren ermittelten mindestens zwei inneren Kräften und aus den mittels der mindestens zwei Geometriesensoren ermittelten mindestens zwei Kenngrößen der geometrischen Anordnung der mehreren Bauteile zueinander und/oder zu dem Bergefahrzeug zu berechnen. Beispielsweise muss die durch das Havaristenfahrzeug auf den Unterfahrlift wirkende Last nicht direkt durch eine Lastmesszelle gemessen werden. Anstatt, dass diese externe anliegende Last gemessen wird, genügt es, mittels der mindestens zwei Kraftermittlungssensoren und mittels der mindestens zwei Geometriesensoren Messungen durchzuführen und anhand der Ergebnisse dieser Messungen die mindestens zwei inneren Kräfte des Unterfahrlifts und die mindestens zwei Kenngrößen der geometrischen Anordnung der mehreren Bauteile zueinander und/oder zu dem Bergefahrzeug zu ermitteln, insbesondere zu berechnen. Insbesondere werden die mindestens zwei inneren Kräfte aus den Messergebnissen der mindestens zwei Kraftermittlungssensoren ermittelt, insbesondere berechnet, insbesondere in der Steuereinheit. Es kann vorgesehen sein, dass die mindestens zwei inneren Kräfte direkt gemessen werden. Ebenso kann vorgesehen sein, dass die mindestens zwei Kenngrößen der geometrischen Anordnung der mehreren Bauteile direkt gemessen werden. Insbesondere werden aus den mindestens zwei inneren Kräften des Unterfahrlifts und den mindestens zwei Kenngrößen der geometrischen Anordnung der mehreren Bauteile zueinander und/oder zu dem Bergefahrzeug der erste Belastungswert und der zweite Belastungswert berechnet.

Alternativ kann aber auch vorgesehen sein, dass der erste Belastungswert und der zweite Belastungswert direkt gemessen werden, und nicht berechnet werden müssen.

In vorteilhafter Weiterbindung der Erfindung ist vorgesehen, dass bei der Ermittlung, insbesondere der Berechnung, des ersten Belastungswerts und des zweiten Belastungswerts mindestens ein Offsetwert berücksichtigt wird. Der mindestens eine Offsetwert wird ohne externe Belastung des Unterfahrlifts, insbesondere ohne externe Belastung durch das Havaristenfahrzeug, ermittelt. Insbesondere bildet der mindestens eine Offsetwert die Totlast des Unterfahrlifts ab. Durch Berücksichtigung des mindestens einen Offsetwerts bei der Berechnung des ersten Belastungswerts und des zweiten Belastungswerts erfolgt eine Nullung. Es wird dann nur die extern durch das Havaristenfahrzeug auf den Unterfahrlift wirkende Last berücksichtigt. Insbesondere wird der mindestens eine Offsetwert vor Ort kurz vor Durchführung der Ermittlung des ersten Belastungswerts und des zweiten Belastungswerts ermittelt. Es kann vorgesehen sein, dass der mindestens eine Offsetwert indirekt ermittelt wird. Insbesondere kann der mindestens eine Offsetwert aus mindestens zwei inneren Kräften des Unterfahrlifts und aus mindestens zwei Kenngrößen der geometrischen Anordnung der mehreren Bauteile zueinander und/oder zu dem Bergefahrzeug in der Steuereinheit indirekt ermittelt, insbesondere berechnet, werden.

In vorteilhafter Weiterbildung der Erfindung, wird bei der Ermittlung, insbesondere der Berechnung, des ersten Belastungswerts ein erster Korrekturfaktor, insbesondere zur Berücksichtigung von Reibungskräften, verwendet. Zusätzlich oder alternativ kann vorgesehen sein, dass bei der Ermittlung, insbesondere der Berechnung, des zweiten Belastungswerts ein zweiter Korrekturfaktor, insbesondere zur Berücksichtigung von Reibungskräften, verwendet wird. Insbesondere wird der erste Korrekturfaktor und/oder der zweite Korrekturfaktor rechnerisch basierend auf einem mathematischen Modell berechnet. Vorteilhaft wird der erste Korrekturfaktor jedoch aus einem Vergleich von einem tatsächlich aufgrund des Anhebens der mindestens einen Achse des Havaristenfahrzeugs am Unterfahrlift anliegenden ersten Realbelastungswert und dem ohne Korrekturfaktor ermittelten, insbesondere berechneten, ersten Belastungswert bestimmt. Insbesondere ist der erste Korrekturfaktor empirisch ermittelt. Insbesondere wird alternativ oder zusätzlich der zweite Korrekturfaktor aus einem Vergleich von einem tatsächlich aufgrund des Anhebens der mindestens einen Achse des Havaristenfahrzeugsfahrzeugs am Unterfahrlift anliegenden zweiten Realbelastungswert und dem ohne Korrekturfaktor ermittelten, insbesondere berechneten, zweiten Belastungswert bestimmt. Insbesondere ist der zweite Korrekturfaktor empirisch bestimmt. Insbesondere ist der erste Realbelastungswert und/oder der zweite Realbelastungswert bekannt und/oder direkt mittels eines Kraftmessers gemessen. Es kann vorgesehen sein, dass für verschiedene Realbelastungswerte verschiedene Korrekturfaktoren bestimmt werden. Insbesondere kann eine Funktion bestimmt werden, die eine Abhängigkeit des jeweiligen Korrekturfaktors von dem jeweiligen Belastungswert beschreibt.

In vorteilhafter Weiterbildung der Erfindung weist die Vorrichtung mindestens einen Neigungssensor auf. Mittels des mindestens einen Neigungssensors wird die Neigung des Unterfahrlifts, insbesondere des Bergefahrzeugs, ermittelt. Die Neigung wird gegenüber einer Horizontalebene ermittelt. Das Bergefahrzeug besitzt eine Längsachse. Insbesondere wird mittels des mindestens einen Neigungssensors die Neigung der Längsachse gegen die Horizontalebene ermittelt. Es kann aber auch vorgesehen sein, dass mittels des mindestens einen Neigungssensors die Neigung der Längsachse und/oder einer Achse quer, insbesondere senkrecht zur Längsachse ermittelt wird. Insbesondere umfasst die Vorrichtung zwei Neigungssensoren. Insbesondere dient ein erster Neigungssensor zur Ermittlung der Neigung der Längsachse. Insbesondere dient ein zweiter Neigungssensor zur Ermittlung der Neigung der Querachse. Insbesondere wird die ermittelte Neigung bei der Ermittlung, insbesondere Berechnung, des ersten Belastungswerts und des zweiten Belastungswerts verwendet. Dadurch kann die Neigung, insbesondere die Orientierung im Raum, des Unterfahrlifts, insbesondere des Bergefahrzeugs, bei der Ermittlung, insbesondere Berechnung des ersten Belastungswerts und des zweiten Belastungswerts, berücksichtigt werden. Dies ermöglicht eine korrekte, insbesondere genaue, Ermittlung, insbesondere Berechnung, des ersten Belastungswerts und des zweiten Belastungswerts.

Insbesondere sind der erste Belastungswert und der zweite Belastungswert in einem statischen Zustand des Unterfahrlifts ermittelt. Während der Ermittlung des ersten Belastungswerts und des zweiten Belastungswerts, insbesondere während der Messung der Messwerte mittels der mindestens zwei Kraftermittlungssensoren und der mindestens zwei Geometriesensoren, und insbesondere des mindestens einen Neigungssensors, befindet sich der Unterfahrlift in einem statischen Zustand. Insbesondere sind die mehreren gegeneinander beweglichen Bauteile des Unterfahrlifts im statischen Zustand des Unterfahrlifts unbewegt. Dadurch ist eine genaue und einfache Ermittlung des ersten Belastungswerts und des zweiten Belastungswerts möglich. Es kann aber auch vorgesehen sein, dass der erste Belastungswert und der zweite Belastungswert in einem dynamischen Zustand des Unterfahrlifts ermittelt sind. Insbesondere kann dies auch während der Fahrt des Bergefahrzeugs, insbesondere des Bergezugs, erfolgen.

Zweckmäßig umfasst die Vorrichtung ein Anzeigeelement. Insbesondere wird die Information mittels des Anzeigeelements angezeigt. Insbesondere werden mittels des Anzeigeelements der erste Belastungswert und der zweite Belastungswert angezeigt. Dadurch erhält der Benutzer schnell und unkompliziert eine Information über den ersten Belastungswert und den zweiten Belastungswert. Anhand dieser Belastungswerte kann der Benutzer, insbesondere über Tabellen des Herstellers des Bergefahrzeugs, abschätzen, ob der Bergevorgang hinsichtlich der Achslast des Bergefahrzeugs und/oder hinsichtlich der Strukturfestigkeit des Unterfahrlifts zulässig ist. Anhand einer Last-Geschwindigkeits-Matrix des Bergefahrzeugs kann der Benutzer die maximal zulässige Geschwindigkeit während des Bergevorgangs ermitteln.

In vorteilhafter Weiterbildung der Erfindung kann vorgesehen sein, dass die Information die Zulässigkeit und/oder das Risiko der Bergung des Havaristenfahrzeugs, insbesondere bezüglich der Strukturfestigkeit des Unterfahrlifts und/oder seiner Verbindung zum Bergefahrzeug und/oder der maximalen Achslast des Bergefahrzeugs, betrifft. Insbesondere können für die Erstellung einer derartigen Information Daten des Bergefahrzeugs und/oder des Unterfahrlifts berücksichtigt werden. Beispielsweise kann in der Steuereinheit eine entsprechende Datentabelle, insbesondere vom Hersteller des Bergefahrzeugs, hinterlegt sein.

Vorteilhaft ist die Information bezüglich der Sicherheit maximal zulässigen Geschwindigkeit des Bergefahrzeugs beim Bergen des Havaristenfahrzeugs. Bei der Erstellung einer solchen Information verwendet die Steuereinheit eine Last-Geschwindigkeits-Matrix, insbesondere vom Hersteller des Bergefahrzeugs, die in der Steuereinheit hinterlegt ist.

Es kann vorgesehen sein, dass die Information ein Hinweis zur Verwendung und/oder Anordnung des Unterfahrlifts am Bergefahrzeug ist, um das Risiko der Bergung des Havaristenfahrzeugs, insbesondere bezüglich der Strukturfestigkeit des Unterfahrlifts und/oder seiner Verbindung zum Bergefahrzeug und/oder der maximalen Achslast des Bergefahrzeugs, zu senken. Beispielsweise kann die Information zunächst darin bestehen, dass auf dem Anzeigeelement angezeigt wird, dass eine Bergung des Havaristenfahrzeugs nicht zulässig ist, wenn der Unterfahrlift in seiner derzeitigen Anordnung am Havaristenfahrzeug verwendet wird. Die Information kann einen Vorschlag enthalten, wie die Anordnung des Unterfahrlifts am Havaristenfahrzeug verändert werden muss, damit eine Bergung des Havaristenfahrzeugs zulässig ist. Ein solcher Hinweis kann beispielsweise darin bestehen, dass vorgeschlagen wird, den Hebelarm zu verkürzen.

In vorteilhafter Weiterbildung der Erfindung, ist die Steuereinheit zur Steuerung der mindestens einen Kraftmaschine des Unterfahrlifts vorgesehen. Dadurch kann mittels der Steuereinheit sowohl die Vorrichtung als auch der Unterfahrlift gesteuert werden. Dies ermöglicht einen einfachen Aufbau der Kombination aus Vorrichtung und Unterfahrlift. Dadurch kann Bauraum eingespart werden. Dadurch können Kosten eingespart werden.

Bei dem erfindungsgemäßen Verfahren zum Betrieb eines an einem Bergefahrzeug angeordneten Unterfahrlifts, wird mittels des Unterfahrlifts die mindestens eine Achse des Havaristenfahrzeugs angehoben. Beim Anheben der mindestens einen Achse des Havaristenfahrzeugs durch den Unterfahrlift werden ein erster Belastungswert und ein zweiter Belastungswert für die Belastung des Unterfahrlifts durch das Anheben der mindestens einen Achse des Havaristenfahrzeugs ermittelt. Der erste Belastungswert und der zweite Belastungswert werden beim weiteren Bergevorgang des Havaristenfahrzeugs verwendet. Dies ist mit den im Zusammenhang zu Vorrichtung für einen Unterfahrlift beschriebenen Vorteilen verbunden. Insbesondere kann aufgrund des erfindungsgemäßen Verfahrens entschieden werden, ob der Bergevorgang zulässig ist und/oder mit welcher Maximalgeschwindigkeit der Bergevorgang erfolgen kann.

In vorteilhafter Weiterbildung des erfindungsgemäßen Verfahrens, werden der erste Belastungswert und der zweite Belastungswert dazu verwendet, die Zulässigkeit und/oder das Risiko der Bergung des Havaristenfahrzeugs, insbesondere bezüglich der Strukturfestigkeit des Unterfahrlifts und/oder seiner Verbindung zum Bergefahrzeug und/oder der maximalen Achslast des Bergefahrzeugs, einzuschätzen. Insbesondere werden der erste Belastungswert und der zweite Belastungswert dazu verwendet, die bezüglich der Sicherheit maximal zulässige Geschwindigkeit des Bergefahrzeugs beim Bergen des Havaristenfahrzeugs zu bestimmen. Auch dies ist mit den zu der Vorrichtung für den Unterfahrlift beschriebenen Vorteilen verbunden.

Insbesondere werden der erste Belastungswert und der zweite Belastungswert indirekt in einer Steuereinheit ermittelt, insbesondere berechnet.

Das Verfahren kann mit den zur Vorrichtung beschriebenen Merkmalen weiterentwickelt werden.

Ein Ausführungsbeispiel der Erfindung wird im Folgenden anhand der Zeichnung erläutert. Es zeigen:
- Fig. 1: eine schematische Seitenansicht eines Bergefahrzeugs mit einem am Bergefahrzeug angeordneten Unterfahrlift,
- Fig. 2: eine schematische Seitenansicht des Unterfahrlifts aus Fig. 1 in einem gegenüber Fig. 1 veränderten geometrischen Zustand, und eine Vorrichtung für den Unterfahrlift zur Erstellung einer Information für die Bergung eines Havaristenfahrzeugs,
- Fig. 3: eine schematische Seitenansicht eines Bergezugs umfassend das Bergefahrzeug aus Fig. 1 mit daran angeordnetem Unterfahrlift und der Vorrichtung aus Fig. 2 und ein Havaristenfahrzeug, das mittels des Unterfahrlifts abgeschleppt wird,
- Fig. 4: eine schematische Darstellung des Unterfahrlifts aus den Figuren 1 bis 3 und der für die Aufstellung der Gleichgewichtsbedingungen des Teilsystems des Unterfahrlifts, das zum Anheben des gesamten Unterfahrlifts gegenüber dem Bergefahrzeug dient, erforderlichen Größen,
- Fig. 5: eine schematische Darstellung analog zu Fig. 4, wobei die Größen eingezeichnet sind, die zur Aufstellung der Gleichgewichtsbedingungen des Teilsystems des Unterfahrlifts, das zum Positionieren des Unterfahrlifts, insbesondere der Abschleppbrille des Unterfahrlifts relativ zum Havaristenfahrzeug dient.

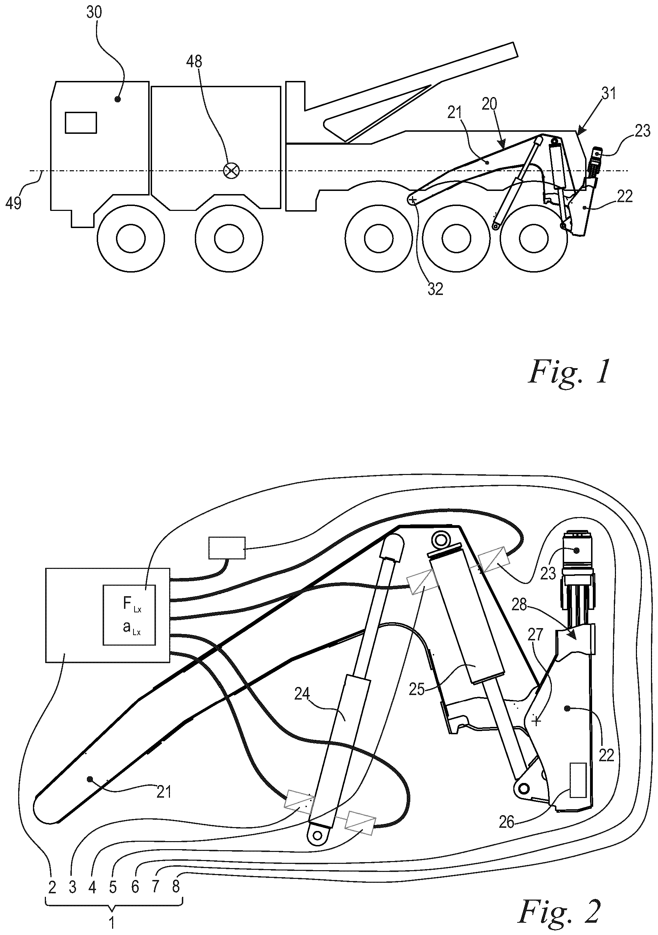

Fig. 1 zeigt ein Bergefahrzeug 30. Bei dem Bergefahrzeug 30 kann es sich um einen Personenkraftwagen (Pkw), einen Lastkraftwagen (Lkw) oder um ein militärisches Bergefahrzeug handeln. Im Ausführungsbeispiel ist das Bergefahrzeug 30 ein militärisches Bergefahrzeug. Derartige Bergefahrzeuge dienen zum Bergen von beschädigten oder festgefahrenen Fahrzeugen aus dem Gefahrenbereich, zum Abschleppen von defekten Fahrzeugen im Gelände und auf Straßen und/oder zum Sichern von Fahrzeugen bei Gewässerdurchquerungen. Derartige Bergefahrzeuge sind in der Regel mit spezieller Ausrüstung wie Seilwinden, Kranvorrichtungen und Abschlepparmen ausgestattet. Sie können je nach Modell und Einsatzzweck unterschiedliche Größen und Kapazitäten haben, von leichten Radfahrzeugen bis hin zu schweren Kettenfahrzeugen. Ganz allgemein kann das Bergefahrzeug 30 unabhängig vom jeweiligen Typ des Bergefahrzeugs als Abschleppfahrzeug bezeichnet werden.

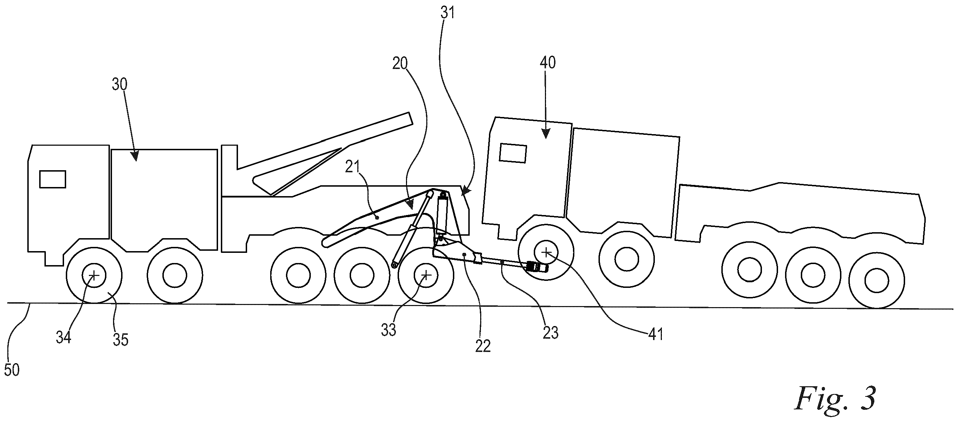

An dem Bergefahrzeug 30 ist ein Unterfahrlift 20 angeordnet. Ein Unterfahrlift dient zum Anheben und Abschleppen eines in Fig. 3 dargestellten Havaristenfahrzeugs 40. Der Unterfahrlift 20 ist zum Anheben mindestens einer Achse 41 des Havaristenfahrzeugs 40 vorgesehen. Im Ausführungsbeispiel ist der Unterfahrlift 20 im Bereich des Hecks 31 des Bergefahrzeugs 30 angeordnet. Bei einem Bergevorgang ragt der Unterfahrlift 20 entgegen der Fahrtrichtung über das Heck 31 des Bergefahrzeugs 30 heraus. Dies ist beispielsweise in Fig. 3 dargestellt. Der Unterfahrlift 20 ist an dem Bergefahrzeug 30 befestigt. Dies kann insbesondere mittels Schrauben erfolgen. Es kann auch vorgesehen sein, dass der Unterfahrlift 20 unlösbar mit dem Bergefahrzeug 30 verbunden ist. Der Unterfahrlift 20 kann unter das Havaristenfahrzeug 40 gefahren werden. Mittels des Unterfahrlifts 20 kann die mindestens eine Achse 41 des Havaristenfahrzeugs 40 angehoben werden. Bei der mindestens einen Achse 41, die angehoben wird, handelt es sich insbesondere um die Lenkachse des Havaristenfahrzeugs 40. Grundsätzlich ist es aber auch denkbar, dass eine andere Achse des Havaristenfahrzeugs 40 mittels des Unterfahrlifts 20 angehoben wird. Die mindestens eine Achse 41 wird mittels des Unterfahrlifts 20 so weit angehoben, dass ein Bergen des Havaristenfahrzeugs 40 möglich ist, insbesondere ohne dass das Havaristenfahrzeug 40 dabei von einer Person gelenkt werden muss. Insbesondere wird die mindestens eine Achse 41 so weit angehoben, dass die Reifen der mindestens einen Achse 41 keinen Kontakt mehr zum Boden haben.

Bei dem Havaristenfahrzeug 40 handelt es sich um ein Kraftfahrzeug, das havariert ist. Das Havaristenfahrzeug 40 funktioniert aufgrund eines Unfalls, einer Störung oder eines Schadens nicht mehr ordnungsgemäß oder kann nicht mehr ordnungsgemäß betrieben werden. Die Fahrtüchtigkeit des Havaristenfahrzeugs 40 ist beeinträchtigt. Das Havaristenfahrzeug 40 kann Schäden an Karosserie, dem Motor oder anderen wichtigen Bauteilen aufweisen. Es ist möglicherweise nicht mehr verkehrssicher oder fahrbereit. Bei dem Havaristenfahrzeug 40 kann es sich um einen Pkw, einen Lkw oder ein militärisches Fahrzeug handeln. Im Ausführungsbeispiel handelt es sich bei dem Havaristenfahrzeug 40 um einen Lkw.

Der Unterfahrlift 20 ermöglicht ein beschädigungsfreies Abschleppen des Havaristenfahrzeugs 40. Die Hubkraft des Unterfahrlifts 20 variiert je nach Modell und Ausladung. Je größer die Ausladung des Unterfahrlifts 20 ist, desto geringer ist seine Hubkraft. Typischerweise können Unterfahrlifte Havaristenfahrzeuge mit einem Gewicht von bis zu 150 Tonnen anheben und abschleppen. Bei einer größeren Ausladung des Unterfahrlifts 20, beispielsweise bei einer Ausladung von mehr als 3 Metern ist in der Regel noch ein Gewicht für das Havaristenfahrzeug 40 von bis zum 15 Tonnen möglich.

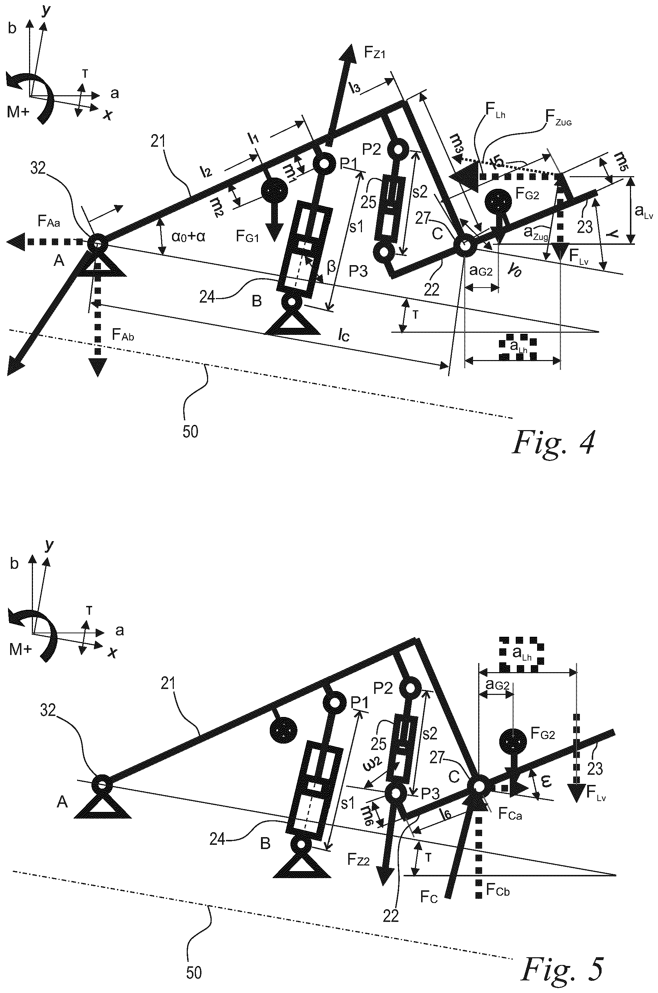

Wie aus der Zusammenschau der Figuren 1 bis 3 ersichtlich, umfasst der Unterfahrlift 20 mehrere gegeneinander bewegliche Bauteile 21, 22, 23. Das erste Bauteil 21 ist mit dem zweiten Bauteil 22 mittels einer in Fig. 2 dargestellten Gelenkverbindung 27 verbunden. Aufgrund der Gelenkverbindung 27 ist das zweite Bauteil 22 gegenüber dem ersten Bauteil 21 verschwenkbar. Das zweite Bauteil 22 ist verschwenkbar an dem ersten Bauteil 21 gelagert. Das dritte Bauteil 23 ist gegenüber dem zweiten Bauteil 22 ausfahrbar. Das dritte Bauteil 23 ist ausfahrbar am zweiten Bauteil 22 gelagert. Das dritte Bauteil 23 und das zweite Bauteil 22 sind mittels einer Teleskopverbindung 28 miteinander verbunden. Die Länge der Baugruppe bestehend aus dem zweiten Bauteil 22 und dem dritten Bauteil 23 ist aufgrund der Teleskopverbindung 28 variabel. In den schematischen Darstellungen nach den Figuren 4 und 5 sind das zweite Bauteil 22 und das dritte Bauteil 23 als ein zusammenhängender Strich dargestellt. Dennoch handelt es sich um zwei getrennte Bauteile und das dritte Bauteil 23 ist aus dem zweiten Bauteil 22 ausziehbar. Wie in Fig. 1 dargestellt, ist das erste Bauteil 21 des Unterfahrlifts 20 gegenüber dem Bergefahrzeug 30 schwenkbar gelagert. Das erste Bauteil 21 ist mit dem Bergefahrzeug 30 durch eine Schwenkverbindung 32 verbunden. Das erste Bauteil 21 ist in Seitenansicht in Richtung der Hinterachse des Bergefahrzeugs im Wesentlichen hakenförmig. Die die beiden Teile des Hakens verbindende Spitze zeigt nach oben. Ein freies Ende des Hakens ist über die Schwenkverbindung 32 mit dem Bergefahrzeug 30 verbunden. Das andere freie Ende des Hakens ragt, insbesondere beim Anheben der mindestens einen Achse 41, über das Heck 31 des Bergefahrzeugs 30 hervor. An diesem freien Ende des Hakens ist die Gelenkverbindung 27 angeordnet, über die das erste Bauteil 21 mit dem zweiten Bauteil 22 verbunden ist.

Der Unterfahrlift 20 umfasst eine erste Kraftmaschine 24, eine zweite Kraftmaschine 25 und eine dritte Kraftmaschine 26, wie in Fig. 2 dargestellt. Mittels der ersten Kraftmaschine 24 ist das erste Bauteil 21 gegenüber dem Bergefahrzeug 30 verschwenkbar. Da das zweite Bauteil 22 und das dritte Bauteil 23 mit dem ersten Bauteil 21 verbunden sind, werden bei einem Verschwenken des ersten Bauteils 21 mittels der ersten Kraftmaschine 24 auch das zweite Bauteil 22 und das dritte Bauteil 23 mit verschwenkt. Die erste Kraftmaschine 24 dient zum Anheben des gesamten Unterfahrlifts 20, inbesondere der mindestens einen Achse 41 des Havaristenfahrzeugs 40.

Mittels der zweiten Kraftmaschine 25 ist das zweite Bauteil 22 gegenüber dem ersten Bauteil 21 um die Gelenkverbindung 27 verschwenkbar. Mittels der zweiten Kraftmaschine 25 können das zweite Bauteil 22 und das dritte Bauteil 23 bezüglich eines Winkels zum Havaristenfahrzeug 40 eingestellt werden. Insbesondere können mittels der zweiten Kraftmaschine 25 das zweite Bauteil 22 und das dritte Bauteil 23 so verschwenkt werden, dass sie im angehobenen Zustand der mindestens einen Achse 41, insbesondere während des Abschleppens, des Havaristenfahrzeugs im Wesentlichen parallel zum Unterboden des Havaristenfahrzeugs 40 verlaufen.

Mittels der dritten Kraftmaschine 26 ist das dritte Bauteil 23 gegenüber dem zweiten Bauteil 22 ausfahrbar.

Im Ausführungsbeispiel ist die erste Kraftmaschine 24 ein Zylinder, insbesondere ein Hydraulikzylinder. Im Ausführungsbeispiel ist die zweite Kraftmaschine 25 ein Zylinder, insbesondere ein Hydraulikzylinder. Im Ausführungsbeispiel ist die dritte Kraftmaschine 26 ein Zylinder, insbesondere ein Hydraulikzylinder. Die dritte Kraftmaschine 26 ist in Fig. 2 lediglich schematisch dargestellt. Die erste Kraftmaschine 24 wir auch als "Raise"-Zylinder bezeichnet. Die zweite Kraftmaschine 25 wird auch als "Tilt"-Zylinder bezeichnet. Die dritte Kraftmaschine 26 wird auch als TeleskopZylinder bezeichnet. Das erste Bauteil 21 wird auch als "Raise"-Schwenkarm bezeichnet. Das zweite Bauteil 22 wir auch als "Tilt"-Schwenkarm bezeichnet. Das dritte Bauteil 23 wird auch als "Stinger" bezeichnet. Das dritte Bauteil 23 umfasst insbesondere einen Teil der dritten Kraftmaschine 26. Insbesondere ist die Kolbenstange der dritten Kraftmaschine Bestandteil des dritten Bauteils 23. Das dritte Bauteil 23 ist dazu vorgesehen, dass das Havaristenfahrzeug 40 unmittelbar an ihm anliegt. Aufgrund des Kontakts des dritten Bauteils 23 zum Havaristenfahrzeug 40 wird die mindestens eine Achse 41 des Havaristenfahrzeugs 40 angehoben. Die erste Kraftmaschine 24 dient zum Anheben des gesamten Unterfahrlifts 20 so, dass das Havaristenfahrzeug 40 angehoben wird. Die zweite Kraftmaschine 25 dient zum Positionieren des dritten Bauteils 23 relativ zum Havaristenfahrzeug 40. Insbesondere dient die zweite Kraftmaschine 25 zum Positionieren einer nicht dargestellten Abschleppbrille, die Bestandteil des dritten Bauteils 23 sein kann. Mittels der zweiten Kraftmaschine 25 wird die Neigung des dritten Bauteils 23, insbesondere des "Stingers", bestimmt. Mittels der dritten Kraftmaschine 26 kann das dritte Bauteil 23 gegenüber dem zweiten Bauteil 22 ausgefahren und so die Kontaktstelle des dritten Bauteils 23 mit dem Havaristenfahrzeug 40 verändert werden. Insbesondere kann hierbei die Position der Abschleppbrille am Havaristenfahrzeug 40 eingestellt werden.

Der Unterfahrlift 20 wird auch als "Underlift" bezeichnet. Im Ausführungsbeispiel ist eine konkrete Gestaltung eines Unterfahrlifts dargestellt. Es sind jedoch auch andere Ausgestaltungen denkbar. Ein Unterfahrlift ist grundsätzlich ein kinematisches Gelenksystem, das aus drei gegeneinander beweglichen Bauteilen besteht, die über Gelenkverbindungen miteinander verbunden sind. Es sind aber auch Strukturen denkbar, die mehr als drei bewegliche Bauteile besitzen oder z. B. mit einem Kranarm kombiniert sind. Die inneren Kräfte des Unterfahrlifts können auch über Seilzüge oder Bänder übertragen und/oder aufgebracht werden und zum Erreichen einer bestimmten geometrischen Anordnung des Unterfahrlifts, insbesondere der drei beweglichen Bauteile des Unterfahrlifts, umgelenkt werden. Allen diesen verschiedenen Typen an Unterfahrliften sind ein kinematischer Zusammenhang und eine entsprechende Kraftmaschine zur Aufbringung der inneren Kräfte, um eine bestimmte geometrische Anordnung der beweglichen Bauteile zueinander zu erreichen, gemeinsam. Zu anderen Typen von Unterfahrliften wird beispielsweise auf die Patentliteratur nach den Dokumenten US 4,875,269 A oder US 6,092,975 A verwiesen. Die Erfindung findet auf all diese verschiedenen Typen von Unterfahrliften Anwendung.

Fig. 2 zeigt eine Vorrichtung 1 für den Unterfahrlift 20. Die Vorrichtung 1 dient zur Erstellung einer Information für die Bergung des Havaristenfahrzeugs 40 mittels des Unterfahrlifts 20. Die Vorrichtung 1 umfasst zumindest eine Steuereinheit 2. Die Vorrichtung 1 ist zur Ermittlung eines ersten Belastungswerts F_{Lv} und eines zweiten Belastungswerts a_{Lh} bei einer Belastung des Unterfahrlifts 20 aufgrund des Anhebens der mindestens einen Achse 41 des Havaristenfahrzeugs 40 ausgelegt. Die Steuereinheit 2 erstellt basierend auf dem ersten Belastungswert F_{Lv} und dem zweiten Belastungswert a_{Lh} eine Information für die Bergung des Havaristenfahrzeugs 40. Der erste Belastungswert F_{Lv} und der zweite Belastungswert a_{Lh} sind in den Figuren 4 und 5 eingezeichnet. In den Ausführungsbeispielen ist der erste Belastungswert F_{Lv} die durch das Havaristenfahrzeug 40 auf den Unterfahrlift 20 wirkende Last. Der erste Belastungswert F_{Lv} ist die durch das Havaristenfahrzeug 40 auf den Unterfahrlift 20 wirkende Kraft. Insbesondere ist der erste Belastungswert F_{Lv} die durch das Havaristenfahrzeug 40 auf den Unterfahrlift 20 in Vertikalrichtung wirkende Kraft. Diese Kraft in Form des ersten Belastungswerts F_{Lv} greift an dem dritten Bauteil 23 des Unterfahrlifts 20 unmittelbar an. Wie in Fig. 3 dargestellt, ragt das dritte Bauteil 23 des Unterfahrlifts 20 beim Anheben der mindestens einen Achse 41 des Havaristenfahrzeugs 40 über das Heck 31 des Bergefahrzeugs 30 in Richtung entgegen der Fahrtrichtung des Bergefahrzeugs 30 hinaus. Vom Unterfahrlift 20 wird die Kraft des ersten Belastungswerts F_{Lv} auf das Bergefahrzeug 30, insbesondere auf die Hinterachse 33 des Bergefahrzeugs 30, übertragen. Dadurch, dass der Unterfahrlift 20, insbesondere das dritte Bauteil 23 in Richtung entgegen der Fahrtrichtung über das Heck 31 des Bergefahrzeugs 30 hinausragt, wirkt auf das Bergefahrzeug 30 ein Drehmoment um die Hinterachse 33. Aufgrund dieses Drehmoments wird die Vorderachse 34 des Bergefahrzeugs 30 entlastet. Die Vorderachse 34 erfährt eine Kraft in Richtung entgegen der Gewichtskraft. Aufgrund dieser Entlastung der Vorderachse 34 ist die Haftreibungskraft (insbesondere der Bodenkontakt) zwischen den der Vorderachse 34 zugeordneten Reifen 35 und dem Boden 50 kleiner. Aufgrund der kleineren Haftreibungskraft lässt sich das Bergefahrzeug 30 schlechter lenken. Dadurch ist die zulässige Maximalgeschwindigkeit des Bergefahrzeugs 30 während der Bergung im Vergleich zu einer Fahrt des Bergefahrzeugs 30 ohne zu bergendes Havaristenfahrzeug 40 kleiner.

Der zweite Belastungswert a_{Lh} ist ein Hebelarm. Die durch das Havaristenfahrzeug 40 am Unterfahrlift 20 anliegende Last, insbesondere Kraft, wirkt mit dem Hebelarm in Form des zweiten Belastungswerts a_{Lh} auf zumindest einen Teil des Unterfahrlifts 20. Insbesondere wirkt die durch das Havaristenfahrzeug 40 am Unterfahrlift 20 anliegende Last mit dem Hebelarm in Form des zweiten Belastungswerts a_{Lh} auf das erst Bauteil 21 des Unterfahrlifts 20. In den Ausführungsbeispielen ist der Hebelarm in Form des zweiten Belastungswerts a_{Lh} in Horizontalrichtung gemessen. Der Hebelarm ist der Abstand zwischen dem Drehpunkt eines Hebels und dem Angriffspunkt einer Kraft. Dieser Abstand wird senkrecht zur Wirkungslinie der Kraft gemessen. Die Länge des Hebelarms entspricht dem kürzesten Abstand zwischen dem Drehpunkt und der Wirkungslinie der Kraft. In den Ausführungsbeispielen ist der Hebelarm in Form des zweiten Belastungswerts der Abstand zwischen der Drehachse der Gelenkverbindung 27 der Wirklinie der Kraft in Form des ersten Belastungswerts F_{Lv}. Die Wirklinie der Kraft in Form des ersten Belastungswerts F_{Lv} erstreckt sich ausgehend von der Auflagestelle des Havaristenfahrzeugs 40 auf dem Unterfahrlift 20, insbesondere auf dem dritten Bauteil 23 des Unterfahrlifts 20, insbesondere in Gewichtskraftrichtung, nach unten.

Der in Horizontalrichtung gemessene Abstand zwischen dem Schwerpunkt/Momentanpol des Bergefahrzeugs 30 und der Achse der Gelenkverbindung 27 ist auch bei einer Schwenkbewegung des ersten Bauteils 21 um die Achse der Schwenkverbindung 32 herum annährend konstant. Daher lassen sich bei Kenntnis des zweiten Belastungswerts a_{Lh} in Form eines Hebelarms und des ersten Belastungswerts F_{Lv} in Form einer Kraft die Achslasten des Bergefahrzeugs 30, insbesondere die Achslast der Hinterachse 33 und der Vorderachse 34 abschätzen, insbesondere berechnen. Durch Kenntnis weiterer Parameter des Bergefahrzeugs 30 ist auch eine genauere Berechnung möglich.

Die Steuereinheit 2 erstellt basierend auf dem ersten Belastungswert F_{Lv} und dem zweiten Belastungswert a_{Lh} eine Information für die Bergung des Havaristenfahrzeugs 40. Im Ausführungsbeispiel sind die Information der ersten Belastungswert F_{Lv} und der zweite Belastungswert a_{Lh} selbst. Es kann aber auch vorgesehen sein, dass die Information die Zulässigkeit und/oder das Risiko der Bergung des Havaristenfahrzeugs 40, insbesondere bezüglich der Strukturfestigkeit des Unterfahrlifts 20 und/oder seiner Verbindung zum Bergefahrzeug 30 und/oder der maximalen Achslast, insbesondere der maximalen Achslasten, des Bergefahrzeugs 30, betrifft. Eine solche Information ermittelt die Steuereinheit 2 aus einem Abgleich mit weiteren Daten, die in der Steuereinheit 2 hinterlegt sind. Bezüglich der Strukturfestigkeit des Unterfahrlifts 20 sind dann hierzu insbesondere Grenzwerte in der Steuereinheit 2 hinterlegt, die eine Aussage über die Strukturfestigkeit des Unterfahrlifts 20 in Abhängigkeit des ersten Belastungswerts F_{Lv} treffen. Dies gilt in selber Form für die Verbindung des Unterfahrlifts 20 zum Bergefahrzeug 30. Auch für die maximale Achslast des Bergefahrzeugs 30 sind dann insbesondere entsprechende Daten in der Steuereinheit 2 hinterlegt, damit die Steuereinheit 2 eine entsprechende Information erstellen kann. Ebenso kann in alternativer Ausgestaltung oder auch zusätzlich vorgesehen sein, dass die Information, die bezüglich der Sicherheit maximal zulässige Geschwindigkeit des Bergefahrzeugs 30 beim Bergen eines Havaristenfahrzeugs 40 ist. Diese Information ermittelt die Steuereinheit 2 aus dem Abgleich mit den Daten einer Last-Geschwindigkeits-Matrix des Bergefahrzeugs 30. Alternativ oder zusätzlich kann vorgesehen sein, dass die Information ein Hinweis zur Verwendung des Unterfahrlifts ist, um durch Umsetzung des Hinweises das Risiko der Bergung des Havaristenfahrzeugs 40, insbesondere bezüglich der Strukturfestigkeit des Unterfahrlifts 20 und/oder seine Verbindung zum Bergefahrzeug 30 und/oder der maximalen Achslast, insbesondere der maximalen Achslasten, des Bergefahrzeugs 30, zu senken. Ein derartiger Hinweis kann beispielsweise darin bestehen, dass dem Benutzer geraten wird, das dritte Bauteil 23 gegenüber dem zweiten Bauteil 22 einzufahren. Dadurch wird der Hebelarm a_{Lh} verkürzt, und das auf das Bergefahrzeug 30 wirkende Drehmoment ist kleiner. Dies erhöht beispielsweise die Haftreibung der Vorderachse 34, insbesondere der Reifen 35 der Vorderachse 34, mit dem Boden 50, wodurch die zulässige Maximalgeschwindigkeit größer ist. Außerdem wird dadurch die Last auf die Achsen des Bergefahrzeugs 30 verringert. Ebenso wird die Kraft auf den Unterfahrlift und seine Bauteile 21, 22, 23 durch Verkürzung des Hebelarms a_{Lh} verkleinert.

Wie in Fig. 2 dargestellt, umfasst die Vorrichtung 1 außer der Steuereinheit 2 einen ersten Kraftermittlungssensor 3, einen zweiten Kraftermittlungssensor 4, einen ersten Geometriesensor 5 und einen zweiten Geometriesensor 6. Der erste Kraftermittlungssensor 3 und der zweite Kraftermittlungssensor 4 dienen zur Ermittlung von inneren Kräften F_{Z1}, F_{Z2}. Der erste Kraftermittlungssensor 3 dient zur Ermittlung der inneren Kraft F_{Z1} des Unterfahrlifts 20. Der zweite Kraftermittlungssensor 4 dient zur Ermittlung der zweiten inneren Kraft F_{Z2}. Die inneren Kräfte F_{Z1} und F_{Z2} sind in den Figuren 4 und 5 dargestellt. Der erste Kraftermittlungssensor 3 ermittelt eine durch die erste Kraftmaschine 24 auf den Unterfahrlift 20, insbesondere auf das erste Bauteil 21 des Unterfahrlifts 20, wirkende Kraft F_{Z1}. Im Ausführungsbeispiel ist der erste Kraftermittlungssensor 3 ein Drucksensor. Der erste Kraftermittlungssensor 3 misst den Druck in der ersten Kraftmaschine 24, insbesondere in dem ersten Zylinder, insbesondere in dem ersten Hydraulikzylinder. Unter Kenntnis der Druckfläche kann die Steuereinheit 2 hieraus die erste innere Kraft F_{Z1} ermitteln, insbesondere berechnen. In analoger Weise ermittelt der zweite Kraftermittlungssensor 4 die durch die zweite Kraftmaschine 24 auf den Unterfahrlift 20, insbesondere auf das zweite Bauteil 22 des Unterfahrlifts 20, wirkende zweite innere Kraft F_{Z2}. Im Ausführungsbeispiel ist der zweite Kraftermittlungssensor 4 ein Drucksensor. Der Kraftermittlungssensor 4 misst den Druck in der zweiten Kraftmaschine 25, insbesondere in dem zweiten Zylinder, insbesondere in dem zweiten Hydraulikzylinder. Unter Kenntnis der zweiten Druckfläche kann die Steuereinheit 2 hieraus die zweite innere Kraft F_{Z2} ermitteln, insbesondere berechnen.

Der erste Geometriesensor 5 und der zweite Geometriesensor 6 dienen zur Messung der geometrischen Anordnung des ersten Bauteils 21 und des zweiten Bauteils 22 zueinander und des ersten Bauteils 21 zu dem Bergefahrzeug 30. Der erste Geometriesensor 5 misst die Orientierung des Bergefahrzeugs 30 und des ersten Bauteils 21 zueinander. Dies kann beispielsweise durch Messen des Schwenkwinkels zwischen dem ersten Bauteil 21 und dem Bergefahrzeug 30 bezüglich der Achse der Schwenkverbindung 32 geschehen. Im Ausführungsbeispiel wird die Länge der als erster Zylinder, insbesondere als erster Hydraulikzylinder, ausgebildeten ersten Kraftmaschine 24 gemessen. Im Ausführungsbeispiel ist der erste Geometriesensor 5 ein Längenmesssensor. Die gemessene Länge ist die in Fig. 4 eingezeichnete erste Kenngröße s1 der geometrischen Anordnung des Unterfahrlifts 20. Der erste Geometriesensor 5 misst wie weit die Kolbenstange des ersten Zylinders, insbesondere des ersten Hydraulikzylinders, ausgefahren ist. Hierbei wird der Abstand der Lagerstelle des ersten Zylinders am Bergefahrzeug 30 zu der Lagerstelle P1 der Kolbenstange am ersten Bauteil 21 gemessen. Mit Kenntnis dieser Länge ist die Orientierung des ersten Bauteils 21 relativ zu dem Bergefahrzeug 30 festgelegt. Das erste Bauteil 21 kann nur in einer Ebene verschwenkt werden. In analoger Weise misst der zweite Geometriesensor 6 die Orientierung des ersten Bauteils 21 relativ zu dem zweiten Bauteil 22. Dies kann durch Messen eines Schwenkwinkels zwischen dem ersten Bauteil 21 und dem zweiten Bauteil 22 bezüglich der Achse der Gelenkverbindung 27 geschehen. Im Ausführungsbeispiel misst der zweite Geometriesensor 6 die Länge der als zweiter Zylinder, insbesondere als zweiter Hydraulikzylinder, ausgebildeten zweiten Kraftmaschine 25. Diese zweite Kenngröße s2 ist in den Figuren 4 und 5 eingezeichnet. Die zweite Kenngröße s2 entspricht dem Abstand des Lagerpunktes P3 der als zweiter Zylinder, insbesondere als zweiter Hydraulikzylinder, ausgebildeten zweiten Kraftmaschine 25 an dem dritten Bauteil 23 und dem Lagerpunkt P2 der Kolbenstange der als zweiter Zylinder, insbesondere als zweiter Hydraulikzylinder, ausgebildeten zweiten Kraftmaschine 25 an dem ersten Bauteil 21. Der zweite Geometriesensor 6 misst, wie weit die Kolbenstange des zweiten Zylinders, insbesondere des zweiten Hydraulikzylinders, ausgefahren ist. Im Ausführungsbeispiel ist der zweite Geometriesensor 6 ein Längenmesssensor. Durch die Länge s2 der zweiten Kraftmaschine 25 ist die relative Orientierung des ersten Bauteils 21 und des zweiten Bauteils 22 zueinander festgelegt. Das zweite Bauteil 22 kann gegenüber dem ersten Bauteil 21 nur in einer Ebene verschwenkt werden.

Anstelle der Länge s1 könnte als erste Kenngröße auch der in Fig. 4 eingezeichnete Winkel β zwischen der als Zylinder, insbesondere als Hydraulikzylinder, ausgebildeten ersten Kraftmaschine 24 und dem Bergefahrzeug 30 mittels des ersten Geometriesensors 5 gemessen werden. Anstelle der Länge s2 könnte als zweite Kenngröße auch der in Fig. 5 eingezeichnete Winkel ω₂ zwischen der als Zylinder, insbesondere als Hydraulikzylinder, ausgebildeten zweiten Kraftmaschine 25 und dem Bergefahrzeug 30 mittels des zweiten Geometriesensors 6 gemessen werden.

Die Steuereinheit 2 ermittelt den ersten Belastungswert F_{Lv} und den zweiten Belastungswert a_{Lh} aus der ersten inneren Kraft F_{Z1}, der zweiten inneren Kraft F_{Z2}, der ersten Kenngröße s1 der geometrischen Anordnung des ersten Bauteils 21 und des Bergefahrzeugs 30 zueinander und der zweiten Kenngröße s2 der geometrischen Anordnung des ersten Bauteils 21 und des zweiten Bauteils 22 zueinander indirekt. Insbesondere berechnet die Steuereinheit 2 den ersten Belastungswert F_{Lv} und den zweiten Belastungswert a_{Lh} aus der ersten inneren Kraft F_{Z1}, der zweiten inneren Kraft F_{Z2}, der ersten Kenngröße s1 und der zweiten Kenngröße s2. Die inneren Kräfte F_{Z1} und F_{Z2} und die geometrische Anordnung des Unterfahrlifts 20 werden bei der Ermittlung des ersten Belastungswerts F_{Lv} und des zweiten Belastungswert a_{Lh} verwendet. Die weiteren, festen, zur Berechnung der beiden Belastungswerte F_{Lv} und a_{Lh} erforderlichen geometrischen Kenngrößen sind in der Steuereinheit hinterlegt. Diese weitere geometrischen Kenngrößen sind in den Fig. 4 und 5 eingezeichnet.

Wie in Fig. 2 dargestellt, umfasst die Vorrichtung 1 insbesondere einen Neigungssensor 7. Mittels des Neigungssensors 7 wird die in den Figuren 4 und 5 dargestellte Neigung τ des Unterfahrlifts 20, insbesondere des Bergefahrzeugs 30, gegenüber der Horizontalebene ermittelt. Der Neigungssensor 7 ist zur Anordnung an dem Bergefahrzeug 30, insbesondere am Fahrgestell des Bergefahrzeugs 30 vorgesehen. Wenn der Unterfahrlift 20, insbesondere das Bergefahrzeug 30, sich auf der Horizontalebene befindet, ist die Neigung τ Null. Das Bergefahrzeug 30 besitzt eine Längsachse 49, wie in Fig. 1 eingezeichnet. Quer, insbesondere senkrecht zur Längsachse 49 verläuft eine Querachse 48. Die Querachse 48 erstreckt sich von einer Seite des Bergefahrzeugs 30 zur anderen. Die Querachse 48 verläuft parallel zum in Fig. 3 eingezeichneten Boden 50. In Fig. 1 ist die Querachse 48 als Richtung eingezeichnet, tatsächlich handelt es sich aber um eine Achse. Im Ausführungsbeispiel ist der Winkel τ der Neigung des Unterfahrlifts 20, insbesondere des Bergefahrzeugs 30, der Winkel zwischen der Längsachse 49 des Bergefahrzeugs 30 und der Horizontalebene. Hierbei verläuft die Querachse 48 senkrecht zur Längsachse 49 und parallel zur Horizontalebene. Die Querachse 48 erstreckt sich in Horizontalrichtung. In anderen Worten: die Querachse 48 ist nicht gegenüber der Horizontalebene verkippt. Ausschließlich die Längsachse 49 ist gegenüber der Horizontalebene verkippt. In alternativer Ausführung der Erfindung können auch Situationen berücksichtigt werden, in denen auch oder nur die Querachse 48 verkippt ist. Insbesondere umfasst die Vorrichtung 1 dann einen zweiten Neigungssensor zur Messung der Neigung der Querachse 48 gegen die Horizontalebene. Die Neigung τ wird bei der Ermittlung, insbesondere Berechnung, des ersten Belastungswerts F_{Lv} und des zweiten Belastungswerts a_{Lh} verwendet. Insbesondere wird die Neigung τ der Steuereinheit 2 übermittelt. Die Steuereinheit 2 verwendet die Neigung τ bei der Berechnung des ersten Belastungswerts F_{Lv} und des zweiten Belastungswerts a_{Lh}.

Im Ausführungsbeispiel werden der erste Belastungswert F_{Lv} und der zweite Belastungswert a_{Lh} in einem statischen Zustand des Unterfahrlifts 20 ermittelt. Im statischen Zustand des Unterfahrlifts 20 findet keine Bewegung des ersten Bauteils 21 gegenüber dem Bergefahrzeug 30, keine Bewegung des zweiten Bauteils 22 gegenüber dem ersten Bauteil 21 und keine Bewegung des dritten Bauteils 23 gegenüber dem zweiten Bauteil 22 statt. Der Unterfahrlift 20 ist im statischen Zustand unbewegt. Es kann aber auch vorgesehen sein, dass der erste Belastungswert F_{Lv} und der zweite Belastungswert a_{Lh} in einem dynamischen Zustand des Unterfahrlifts 20 ermittelt werden. In diesem Fall werden der erste Belastungswert F_{Lv} und der zweite Belastungswert a_{Lh} während einer Bewegung beispielsweise des ersten Bauteils 21 gegenüber dem Bergefahrzeug 30, des zweiten Bauteils 22 gegenüber dem ersten Bauteil 21 und/oder des dritten Bauteils 23 gegenüber dem zweiten Bauteil 22 ermittelt. Insbesondere findet die Ermittlung der inneren Kräfte F_{Z1} und F_{Z2} und der Kenngrößen s1 und s2 im dynamischen Zustand des Unterfahrlifts 20 statt. Auch während der Fahrt des Bergefahrzeugs 30, insbesondere des Bergezugs, ist eine Ermittlung des ersten Belastungswert F_{Lv} und des zweite Belastungswert a_{Lh}, insbesondere der inneren Kräfte F_{Z1} und F_{Z2} und der Kenngrößen s1 und s2, denkbar.

Es kann auch vorgesehen sein, dass der erste Belastungswert F_{Lv} und der zweite Belastungswert a_{Lh} zwei oder mehrmals erfolgt, insbesondere im statischen Zustand. Es kann auch vorgesehen sein, dass das Havaristenfahrzeug 40 zunächst durch einen kurzen Bergevorgang in eine günstigere Position gebracht wird, insbesondere aus einer extremen Position oder Situation, aus der man insbesondere üblicherweise nicht bergen würde. Anschließend können erstmalig oder auch erneut statisch der erste Belastungswert F_{Lv} und der zweite Belastungswert a_{Lh} ermittelt werden. Ein möglicher Bergevorgang kann dann bewertet werden.

Insbesondere kann eine Ermittlung des ersten Belastungswert F_{Lv} und des zweite Belastungswert a_{Lh}, insbesondere der inneren Kräfte F_{Z1} und F_{Z2} und der Kenngrößen s1 und s2, auch erfolgen, wenn auf das Bergefahrzeug 30 eine Hangabtriebskraft wirkt. Auch in dieser Situation ist sowohl eine statische als auch eine dynamische Ermittlung denkbar.

Im Ausführungsbeispiel werden der ersten Belastungswert F_{Lv} und der zweite Belastungswert a_{Lh} in der Steuereinheit 2 berechnet. Es kann aber auch vorgesehen sein, dass der erste Belastungswert F_{Lv} und der zweite Belastungswert a_{Lh} direkt gemessen werden. In diesem Fall sind entsprechende Messsensoren, optional auch mobile Geräte, vorgesehen.

Im Ausführungsbeispiel werden der erste Belastungswert F_{Lv} und der zweite Belastungswert a_{Lh} für den Fall berechnet, dass die Querachse 48 des Bergefahrzeugs 30 keine Neigung aufweist, also in Horizontalrichtung verläuft. In den Figuren 4 und 5 ist der Unterfahrlift 20 bezüglich der wirkenden Kräfte in zwei Teilsysteme aufgeteilt. Fig. 4 zeigt die Größen, die für das Anheben des Unterfahrlifts mittels der ersten Kraftmaschine 24 relevant sind. Fig. 4 betrifft das erste Teilsystem. Fig. 5 zeigt die Größen, die für das Verschwenken des zweiten Bauteils 22 relativ zum ersten Bauteil 21 mittels der zweiten Kraftmaschine 25 relevant sind. Fig. 5 betrifft das zweite Teilsystem. Die unbekannten Größen der beiden Teilsysteme sind gestrichelt eingezeichnet oder mit einem gestrichelten Kasten markiert. In Fig. 4 sind dies vier unbekannte Größen. Hierzu zählen die gestrichelt eingezeichneten Kräfte F_{Aa}, F_{Ab}, F_{Lv} (erster Belastungswert) und der gestrichelt markierte Hebelarm a_{Lh} (zweiter Belastungswert). In Fig. 5 sind die vier unbekannten Größen die gestrichelt eingezeichneten Kräfte F_{Ca}, F_{Cb}, F_{Lv} (erster Belastungswert) und der gestrichelt markierte Hebelarm a_{Lh} (zweiter Belastungswert). Die Kraft F_{Aa} ist die in Horizontalrichtung auf die Schwenkverbindung zwischen dem Bergefahrzeug 30 und dem ersten Bauteil 21 des Unterfahrlifts wirkende Kraft. Die Kraft F_{Ab} ist die in Gewichtskraftrichtung auf die Schwenkverbindung 32 wirkende Kraft. Die Kraft F_{Ca} ist die in Horizontalrichtung auf die Gelenkverbindung 27 zwischen dem ersten Bauteil 21 und dem zweiten Bauteil 22 wirkende Kraft. Die Kraft F_{Cb} ist die in Richtung entgegen der Gewichtskraft auf die Gelenkverbindung 27 wirkende Kraft.

Die übrigen in den Figuren 4 und 5 eingezeichneten Größen sind entweder bekannt oder können durch Messung mittels der Kraftermittlungssensoren 3 und 4 und der Geometriesensoren 5 und 6 und mittels des Neigungssensors 7 ermittelt werden. Hierzu werden wie beschrieben unter Umständen die tatsächlich gemessenen Werte in der Steuereinheit 2 verarbeitet. Bei dem ebenen System des Ausführungsbeispiels, bei dem die Querachse 48 nicht geneigt ist, werden zur Berechnung des ersten Belastungswerts F_{Lv} und des zweiten Belastungswerts a_{Lh} für jedes Teilsystem drei Gleichgewichtsbedingungen aufgestellt. In jedem der beiden Teilsysteme gibt es vier unbekannte Größen. Da der erste Belastungswert F_{Lv} und der zweite Belastungswert a_{Lh} in den beiden Teilsystemen identische Größen sind, weisen beide Teilsysteme gemeinsam insgesamt sechs unbekannte Größen auf. Weil für jedes der beiden Teilsysteme drei Gleichgewichtsbedingungen aufgestellt werden können, ergeben sich insgesamt sechs Gleichungen, und das Gleichungssystem ist lösbar. Aus dem Gleichungssystem erhält man entsprechende Formeln für den ersten Belastungswert F_{Lv} und den zweiten Belastungswert a_{Lh}. Anhand dieser Formeln berechnet die Steuereinheit 2 den ersten Belastungswert F_{Lv} und den zweiten Belastungswert a_{Lh}. Die unveränderlichen, bekannten geometrischen Größen, die zur Aufstellung der Gleichgewichtsbedinungsgleichungen und zur Lösung des Gleichungssystems erforderlich sind, sind in der Steuereinheit 2 gespeichert (zumindest gehen sie in die Faktoren ein, die in der Lösungsformel für den ersten Belastungswert F_{Lv} und den zweiten Belastungswert a_{Lh} enthalten sind - zumindest diese Faktoren sind in der Steuereinheit 2 gespeichert).

Im Ausführungsbeispiel wird nur ein ebenes System mit ausschließlicher Längsneigung des Bergefahrzeugs 30 betrachtet. Es kann aber auch vorgesehen sein, dass ein dreidimensionales System betrachtet wird. Hierbei sind sowohl die Querachse 48 als auch die Längsachse 49 gegenüber einer Horizontalebene geneigt. Bei dieser räumlichen Anordnung ergeben sich für jedes der beiden Teilsysteme sechs Gleichgewichtsbedingungen. Die Lösung des entsprechenden Gleichungssystems ist entsprechend aufwendiger. Jedoch ist die Lösung genauso möglich wie für das ebene System.

Auch während der Fahrt des Bergefahrzeugs 30, insbesondere des Bergezugs, ist eine Ermittlung, insbesondere Berechnung, des ersten Belastungswerts F_{Lv} und des zweiten Belastungswerts a_{Lh} möglich.

Alternativ oder zusätzlich zur Ermittlung des ersten Belastungswerts F_{Lv} und des zweiten Belastungswerts a_{Lh} können auch ein dritter Belastungswert F_{Zug} und ein vierter Belastungswert a_{Zug} ermittelt, insbesondere berechnet, werden (Fig. 4). Der dritte Belastungswert F_{Zug} ist die Zugkraft. Die Zugkraft wirkt in Fahrtrichtung des Bergefahrzeugs 30, insbesondere des Bergezugs. Insbesondere wirkt die Zugkraft in Richtung der in Fig. 1 eingezeichneten Längsachse 49 des Bergefahrzeugs 30. Insbesondere wirkt die Zugkraft in Richtung parallel zum Boden 50. Die Zugkraft wird insbesondere mit Hilfe der Kraft F_{Lh} berechnet, die senkrecht zur Kraft des ersten Belastungswerts F_{Lv} wirkt. Die Kraft F_{Lh} verläuft insbesondere in Horizontalrichtung. Der vierte Belastungswert a_{Zug} ist ein Hebelarm, mit dem die aufgrund des Ziehens des Havaristenfahrzeugs 40 am Unterfahrlift 20 anliegende Zugkraft auf den Schwerpunkt/Momentanpol des Bergefahrzeugs 30 (zusammen mit dem Unterfahrlift 20) wirkt. In Fig. 4 ist der Schwerpunkt schematisch beim Punkt C liegend angenommen, also in der Gelenkverbindung 27. Mit Hebelarm ist in diesem Zusammenhang insbesondere die Länge des Hebelarms in Richtung senkrecht zur Längsachse 49 (Fig. 1) des Bergefahrzeugs 30, insbesondere senkrecht zum Boden 50 (Fig. 3), bezeichnet. Wenn der Boden 50 (Fig. 3), auf dem die Bergung stattfindet, sich in einer Horizontalebene erstreckt, dann erstreckt sich der Hebelarm in Vertikalrichtung. Bei einer Neigung des Bodens 50 (in Fig. 4 oder 5 schematisch eingezeichnet) um den Winkel τ gegen die Horizontalebene erstreckt sich der Hebelarm um den Winkel τ geneigt zur Vertikalrichtung. Zur Ermittlung des dritten Belastungswerts F_{Zug} muss zusätzlich ein nicht dargestelltes drittes Teilsystem berücksichtigt werden. Mit dem dritten Teilsystem ist die dritte Kraftmaschine 26 verknüpft. Insbesondere ist das dritte Teilsystem mit der als Zylinder, insbesondere als Hydraulikzylinder, ausgebildeten dritten Kraftmaschine 26 verknüpft. Insbesondere betrifft das dritte Teilsystem den Zylinder im Stinger. Der vierte Belastungswert a_{Zug} kann aus bekannten geometrischen Größen ermittelt werden. Eine zum dritten Teilsystem zugehörige dritte innere Kraft und eine zugehörige dritte geometrische Größe a_{Lv} (Fig. 4) fließen in die zugehörigen Gleichgewichtsbedingungen ein. Die dritte innere Kraft wird dann aus der Messung eines dritten Kraftermittlungssensors, insbesondere eines Druckmessgeräts, an der als drittem Zylinder, insbesondere drittem Hydraulikzylinder, ausgebildeten dritten Kraftmaschine 26, ermittelt. Insbesondere ist der dritte Kraftermittlungssensor am dritten Bauteil 23 angeordnet. Insbesondere ist der dritte Kraftermittlungssensor am, insbesondere im, Stinger angeordnet. Die dritte geometrische Größe a_{Lv} wird aus dem bekannten Winkel γ (Fig. 4) zwischen einer Längsachse der dritten Kraftmaschine 26, insbesondere des Stingers, und dem Boden 50 und aus dem bekannten Abstand m5 (Fig. 4) zwischen der Auflagestelle des Havaristenfahrzeugs 40 auf dem dritten Bauteil 23, insbesondere auf dem Stinger, und der Längsachse der dritten Kraftmaschine 26, sowie der zweiten geometrischen Größe a_{Lh} berechnet. Die Längsachse der dritten Kraftmaschine 26 ist insbesondere eine Zentralachse der Kolbenstange der als Zylinder, insbesondere als Hydraulikzylinder, ausgebildeten dritten Kraftmaschine 26. Die Längsachse wird auch als Stingerachse bezeichnet. Der Abstand m5 ist lotrecht zur Längsachse der dritten Kraftmaschine 26, insbesondere des Stingers, gemessen. Die dritte geometrische Größe wird ohne einen dritten Geometriesensor bestimmt. Die dritte innere Kraft ist eine Kenngröße, die zur Bestimmung der Kraft F_{LH} genutzt wird. Im Ausführungsbeispiel werden hierfür außerdem der Winkel γ und die Kraft F_{LV} verwendet. Die dritte geometrische Größe a_{LV} wird unter Nutzung des zweiten Belastungswerts a_{LH}, des Winkels γ und des Abstands m5 berechnet. Falls die Ermittlung des dritten Belastungswerts F_{Zug} und des vierten Belastungswerts a_{Zug} vorgesehen ist, umfasst die Vorrichtung 1 zusätzlich einen dritten Kraftermittlungssensor, der insbesondere mit der Steuereinheit 2 verbunden ist. Im Ausführungsbeispiel ist dies jedoch nicht der Fall.

Im Ausführungsbeispiel wird bei der Ermittlung, insbesondere der Berechnung, des ersten Belastungswerts F_{Lv} ein erster Korrekturfaktor zur Berücksichtigung von Reibungskräften verwendet. Bei der Ermittlung, insbesondere der Berechnung, der zweiten Belastungswerts a_{Lh} wird ein zweiter Korrekturfaktor zur Berücksichtigung von Reibungskräften verwendet. Der erste Korrekturfaktor und der zweite Korrekturfaktor können mittels eines mathematischen Modells berechnet werden, bzw. berechnet worden sein. Insbesondere können die Reibungskräfte bei der Aufstellung der Gleichgewichtsbedingungen berücksichtigt werden. Im Ausführungsbeispiel werden der erste Korrekturfaktor und der zweite Korrekturfaktor jedoch empirisch ermittelt, bzw. sind empirisch ermittelt worden. Hierzu wird ein erster Realbelastungswert ermittelt, insbesondere gemessen. Der erste Realbelastungswert entspricht einem tatsächlich aufgrund des Anhebens der mindestens einer Achse 41 des Havaristenfahrzeugs 40 am Unterfahrlift 20 anliegenden Belastungswert. Der erste Realbelastungswert wird mit einem ohne Korrekturfaktor ermittelten, insbesondere berechneten, ersten Belastungswert F_{Lv} verglichen. Aus diesem Vergleich wird der erste Korrekturfaktor bestimmt. Durch Messungen aus vielen verschiedenen ersten Realbelastungswerten und zugehörigen Berechnungen von ersten Belastungswerten F_{Lv} ohne Korrekturfaktor kann eine Funktion für den Korrekturfaktor in Abhängigkeit des ersten Belastungswerts F_{Lv} ohne Korrekturfaktor ermittelt werden. Insbesondere können bei den verschiedenen Messungen auch verschiedene Werte für die erste Kenngröße s1 berücksichtigt werden. Außerdem können verschiedene Ausfahrzustände des dritten Bauteils 23 gegenüber dem zweiten Bauteil 22 berücksichtigt werden. Die Funktion für den ersten Korrekturfaktor kann durch eine lineare oder polynomische Regression erhalten werden. Hierbei kann beispielsweise eine Funktion modelliert werden, die den Zusammenhang zwischen den ohne Korrekturfaktor errechneten ersten Belastungswerten F_{Lv} und den tatsächlich gemessenen ersten Realbelastungswerten abbildet. In analoger Weise kann der zweite Korrekturfaktor, bzw. eine Funktion für den zweiten Korrekturfaktor ermittelt werden. Hierbei wird zunächst ein tatsächlich aufgrund des Anhebens der mindestens einen Achse 41 des Havaristenfahrzeugs 40 am Unterfahrlift 20 anliegenden zweiten Realbelastungswert ermittelt, insbesondere gemessen. Die Ermittlung des zweiten Korrekturfaktors erfolgt dann analog zu der Ermittlung des ersten Korrekturfaktors. Der erste Korrekturfaktor und der zweite Korrekturfaktor, insbesondere deren zugehörige Funktionen, sind in der Steuereinheit 2 gespeichert. Sie werden im Vorfeld einmalig bestimmt.

Bei der Ermittlung, insbesondere der Berechnung, des ersten Belastungswerts F_{Lv} und des zweiten Belastungswerts a_{Lh} wird mindestens ein Offsetwert berücksichtigt. Der Offsetwert wird ohne externe Belastung des Unterfahrlifts 20, insbesondere ohne externe Belastung durch das Havaristenfahrzeug 40, ermittelt. Auf diese Weise wird die Totlast des Unterfahrlifts 20 ermittelt und in Form des mindestens einen Offsetwerts berücksichtigt. Die Ermittlung des mindestens einen Offsetwerts wird auch als "teachen" bezeichnet. Der mindestens eine Offsetwert wird im Ausführungsbeispiel jedes Mal vor Ort neu ermittelt, wobei sich das Bergefahrzeug bereits in der für das Anheben der mindestens einen Achse 41 des Havaristenfahrzeugs 40 erforderlichen Position, insbesondere Neigung, befindet. Zusätzlich oder alternativ kann vorgesehen sein, dass der mindestens eine Offsetwert fest in der Steuereinheit 2 hinterlegt ist. Wenn der mindestens eine Offsetwert vor Ort ermittelt wird, dann wird dieser Wert verwendet. Falls nicht, wird auf den fest in der Steuereinheit 2 hinterlegten mindestens einen Wert zurückgegriffen.

Wie in Fig. 2 dargestellt, kann vorgesehen sein, dass die Vorrichtung 1 ein Anzeigeelement 8 umfasst. Die von der Steuereinheit 2 erstellte Information wird mittels des Anzeigeelements 8 angezeigt. Im Ausführungsbeispiel werden mittels des Anzeigeelements 8 der erste Belastungswert F_{Lv} und der zweite Belastungswert a_{Lh} angezeigt. Es kann aber auch vorgesehen sein, dass eine der zuvor beschriebenen Arten von Information alternativ oder zusätzlich angezeigt wird. Im Ausführungsbeispiel kann der Benutzer den ersten Belastungswert F_{Lv} und den zweiten Belastungswert a_{Lh} nutzen, um beispielsweise zu beurteilen, ob die für das Bergefahrzeug 30 zulässige Achslast überschritten wird, wenn das Havaristenfahrzeug 40 abgeschleppt wird. Hierbei wird insbesondere eine Tabelle des Herstellers des Bergefahrzeugs 30 hinzugezogen. Im Ausführungsbeispiel ist das Anzeigeelement 8 ein Display. Das Anzeigeelement 8 kann insbesondere an der Steuereinheit 2 angeordnet sein. Es kann aber auch vorgesehen sein, dass das Display getrennt von der Steuereinheit 2 ausgebildet ist. Es kann vorgesehen sein, dass die Information mittels einer Funkverbindung, insbesondere als Funksignal, an das Anzeigeelement 8 übermittelt wird.

Es kann vorgesehen sein, dass die Steuereinheit 2 zur Steuerung der mindestens einen Kraftmaschine 24, 25, 26 vorgesehen ist. Insbesondere können mittels der Steuereinheit 2 die erste Kraftmaschine 24, die zweite Kraftmaschine 25 und die dritte Kraftmaschine 26 angesteuert werden. Insbesondere kann das Anzeigeelement 8 auch als Eingabeeinheit ausgebildet sein. Über das Anzeigeelement 8 können in diesem Fall Eingaben zur Steuerung der Kraftmaschinen 24, 25, 26 getätigt werden. Die entsprechenden Eingaben werden an die Steuereinheit 2 übermittelt und der Unterfahrlift 20 entsprechend angesteuert. Es kann vorgesehen sein, dass die Eingaben über eine Funkverbindung von dem Anzeigeelement 8 an die Steuereinheit 2 übermittelt werden.

Wie in Fig. 2 dargestellt, ist die Steuereinheit 2 über Kabel mit den Sensoren 3, 4, 5, 6 und 7 verbunden. Es kann aber auch vorgesehen sein, dass die Steuereinheit 2 die Signale von den Sensoren 3, 4, 5, 6 und 7 kabellos mittels einer Funkverbindung empfängt.

Beim erfindungsgemäßen Verfahren zum Betrieb des an dem Bergefahrzeug 30 angeordneten Unterfahrlifts 20 werden beim Anheben der mindestens einen Achse 41 des Havaristenfahrzeugs 40 durch den Unterfahrlift 20 der erste Belastungswert F_{Lv} und der zweite Belastungswert a_{Lh} ermittelt. Beim weiteren Bergevorgang des Havaristenfahrzeugs 40 werden der erste Belastungswert F_{Lv} und der zweite Belastungswert a_{Lh} verwendet. Diese Verwendung kann darin bestehen, dass der erste Belastungswert F_{Lv} und der zweite Belastungswert a_{Lh} dazu verwendet werden, die Zulässigkeit und/oder das Risiko der Bergung des Havaristenfahrzeugs 40, insbesondere bezüglich der Strukturfestigkeit des Unterfahrlifts 20 und/oder seiner Verbindung zum Bergefahrzeug 30 und/oder der maximalen Achslast des Bergefahrzeugs 30, einzuschätzen. Zusätzlich oder alternativ können der erste Belastungswert F_{Lv} und der zweite Belastungswert a_{Lh} dazu verwendet werden, die bezüglich der Sicherheit maximal zulässige Geschwindigkeit des Bergefahrzeugs 30 beim Bergen des Havaristenfahrzeugs 40 zu bestimmen.

Insbesondere werden der erste Belastungswert F_{Lv} und der zweite Belastungswert a_{Lh} indirekt in der Steuereinheit 2 ermittelt, insbesondere berechnet, wie vorstehend beschrieben.

Bei der Durchführung des Verfahrens zum Betrieb des Unterfahrlifts 20 wird zunächst entschieden, ob ein "teachen" durchgeführt wird, also ob vor Ort ein Offsetwert ermittelt werden soll. Wenn das "teachen" durchgeführt werden soll, wird das dritte Bauteil 23 gegenüber dem zweiten Bauteil 22 ausgefahren, und ohne Anliegen einer externen Last wird das "teachen" durchgeführt. Hierbei werden die Totlasten des Unterfahrlifts 20 ermittelt und in Form mindestens eines Offsetwerts in der Steuereinheit 2 gespeichert.

Erst danach wird das Havaristenfahrzeug 40 mittels des Unterfahrlifts 20, insbesondere mittels des dritten Bauteils 23 an das Bergefahrzeug 30 angekoppelt. Wenn kein "teachen" durchgeführt werden soll, ist dies der erste Schritt des Verfahrens. Nachdem Ankoppeln des Havaristenfahrzeugs 40 an das Bergefahrzeug 30 wird das Havaristenfahrzeug 40 mittels des Unterfahrlifts 20 angehoben. Wenn sich das Havaristenfahrzeug 40 in einer Extremsituation befindet, kann es auch vor der Ermittlung der Belastungswerte F_{Lv} und a_{Lh} aus dieser Situation befreit werden. Die Ermittlung der Belastungswerte F_{Lv} und a_{Lh} kann aber auch in dieser Extremsituation erfolgen. Eine solche Extremsituation kann beispielsweise darin bestehen, dass das Havaristenfahrzeug 40 festgefahren ist, an einem Steilhang liegengeblieben ist oder im Schlamm stecken geblieben ist. Nach Befreiung des Havaristenfahrzeugs 40 aus der Extremsituation wird dann das Verfahren zur Ermittlung der Belastungswerte F_{Lv} und a_{Lh} durchgeführt. Mittels des ersten Kraftermittlungssensors 3 und des zweiten Kraftermittlungssensors 4 werden die erste innere Kraft F_{Z1} und die zweite innere Kraft F_{Z2} ermittelt. Im Ausführungsbeispiel werden hierzu die entsprechenden Drücke gemessen und an die Steuereinheit 2 übermittelt. In der Steuereinheit 2 werden aus den Drücken die erste innere Kraft F_{Z1} und die zweite innere Kraft F_{Z2} berechnet.

Außerdem werden mittels des ersten Geometriesensors 5 und des zweiten Geometriesensors 6 die erste Kenngröße s1 der geometrischen Anordnung des Unterfahrlifts 20 und die zweite Kenngröße s2 der geometrischen Anordnung des Unterfahrlifts 20 gemessen. Im Ausführungsbeispiel werden also die Länge des ersten Zylinders, insbesondere des ersten Hydraulikzylinders, und die Länge des zweiten Zylinders, insbesondere des zweiten Hydraulikzylinders, gemessen. Die erste Kenngröße s1 und die zweite Kenngröße s2 werden an die Steuereinheit 2 übermittelt.

Anschließend wird entschieden, ob das Havaristenfahrzeug 40 wieder abgelassen wird. Dies geschieht durch eine entsprechende Bewegung des Unterfahrlifts 20, insbesondere durch ein Schwenken des ersten Bauteils 21 um die Achse der Schwenkverbindung 32 gegenüber dem Bergefahrzeug 30. Das Havaristenfahrzeug 40 ist dann nicht mehr angehoben. Insbesondere ist die mindestens eine Achse 41 des Havaristenfahrzeugs 40 dann nicht mehr angehoben.

Anschließend werden der erste Belastungswert F_{Lv} und der zweite Belastungswert a_{Lh} in der Steuereinheit 2 berechnet. Es kann aber auch vorgesehen sein, dass die Berechnung des ersten Belastungswerts F_{Lv} und des zweiten Belastungswerts a_{Lh} bei angehobenem Havaristenfahrzeug 40, insbesondere bei angehobener Achse 41 des Havaristenfahrzeugs 40 erfolgt. Insbesondere werden bei der Berechnung der Offsetwert und die Korrekturfaktoren berücksichtigt. Zusammen mit der Ermittlung der inneren Kräfte F_{Z1} und F_{Z2} und der Kenngrößen s1 und s2 kann auch die Neigung τ gemessen werden und an die Steuereinheit 2 übermittelt werden. Diese Neigung τ kann dann bei der Berechnung des ersten Belastungswerts F_{Lv} und des zweiten Belastungswerts a_{Lh} berücksichtigt werden.

Nach der Berechnung des ersten Belastungswerts F_{Lv} und des zweiten Belastungswerts a_{Lh} wird die basierend auf diesen Werten von der Steuereinheit 2 erstellte Information auf dem Anzeigeelement 8 ausgegeben. Im Ausführungsbeispiel werden der erste Belastungswert F_{Lv} und der zweite Belastungswert a_{Lh} unverändert ausgegeben.

Der Benutzer kann dann den ersten Belastungswert F_{Lv} und den zweiten Belastungswert a_{Lh} mit den Lastdaten aus einer Tabelle des Herstellers des Bergefahrzeugs 30 vergleichen. Wenn er dabei feststellt, dass die Lastdaten, insbesondere unter Berücksichtigung des Hebelarms in Form des zweiten Belastungswerts a_{Lh} zulässig sind, kann das Abschleppen des Havaristenfahrzeugs 20 unter geringem Risiko für das Bergefahrzeug 30 erfolgen.

Für den Fall, dass der Abgleich mit den Daten des Bergefahrzeugs 30 ergibt, dass ein Abschleppen nicht zulässig ist, kann eine Änderung der geometrischen Anordnung des Unterfahrlifts 20 erfolgen. Beispielsweise kann das dritte Bauteil 23 gegenüber dem zweiten Bauteil 22 eingefahren werden. Dann kann das Havaristenfahrzeug 40, insbesondere die Achse 41 des Havaristenfahrzeugs 40 erneut mit dem Unterfahrlift 20 angehoben werden, und erneut können die erste innere Kraft F_{Z1}, die zweite innere Kraft F_{Z2}, die erste Kenngröße s1 und die zweite Kenngröße s2 gemessen werden. Hieran können sich die bereits beschriebenen Schritte des Verfahrens erneut anschließen. Wenn am Ende der Vergleich mit den Lastdaten des Herstellers des Bergefahrzeugs 30 ergibt, dass der erste Belastungswert F_{Lv} und der zweite Belastungswert a_{Lh} zulässig sind, kann ein Abschleppen des Havaristenfahrzeugs unter geringem Risiko für das Bergefahrzeug 30 erfolgen. Man kann aber auch kontrollierbare Risiken mit verringerter Sicherheit eingehen. Insbesondere dann, wenn Grenzwerte für den ersten Belastungswert F_{Lv} und der zweite Belastungswert a_{Lh} nur in einem geringem Maß überschritten werden, beispielsweise um weniger als 10%.

## Patentansprüche

1. Vorrichtung für einen Unterfahrlift, wobei der Unterfahrlift (20) zur Anordnung an einem Bergefahrzeug (30) und zum Anheben mindestens einer Achse (41) eines Havaristenfahrzeugs (40) vorgesehen ist, ,
**dadurch gekennzeichnet, dass** die Vorrichtung (1) zur Ermittlung eines ersten Belastungswerts (F_{Lv}) und eines zweiten Belastungswerts (a_{Lh}) bei einer Belastung des Unterfahrlifts (20) aufgrund des Anhebens der mindestens einen Achse (41) des Havaristenfahrzeugs (40) ausgelegt ist, dass die Vorrichtung (1) eine Steuereinheit (2) umfasst, und dass die Steuereinheit (2) basierend auf dem ersten Belastungswert (F_{Lv}) und dem zweiten Belastungswert (a_{Lh}) eine Information für die Bergung des Havaristenfahrzeugs (40) erstellt.

2. Vorrichtung nach Anspruch 1,
**dadurch gekennzeichnet, dass** der erste Belastungswert (F_{Lv}) die durch das Havaristenfahrzeug (40) auf den Unterfahrlift (20) wirkende Last ist.

3. Vorrichtung nach Anspruch 1 oder 2,
**dadurch gekennzeichnet, dass** der zweite Belastungswert (a_{Lh}) ein Hebelarm ist, mit dem die durch das Havaristenfahrzeug (40) am Unterfahrlift (1) anliegende Last auf zumindest einen Teil des Unterfahrlifts (1) wirkt.

4. Vorrichtung nach einem der Ansprüche 1 bis 3,
**dadurch gekennzeichnet, dass** der Unterfahrlift (20) mehrere gegeneinander bewegliche Bauteile (21, 22, 23) umfasst, dass der erste Belastungswert (F_{Lv}) und der zweite Belastungswert (a_{Lh}) aus mindestens zwei inneren Kräften (F_{Z1}, F_{Z2}) des Unterfahrlifts (20), und aus mindestens zwei Kenngrößen (s1, s2) der geometrischen Anordnung der mehreren Bauteile (21, 22) zueinander und zu dem Bergefahrzeug (30) in der Steuereinheit (2) indirekt ermittelt, insbesondere berechnet, werden.

5. Vorrichtung nach Anspruch 4,
**dadurch gekennzeichnet, dass** bei der Ermittlung, insbesondere der Berechnung, des ersten Belastungswerts (F_{Lv}) und des zweiten Belastungswerts (a_{Lh}) mindestens ein Offsetwert berücksichtigt wird, der ohne externe Belastung des Unterfahrlifts (20), insbesondere durch das Havaristenfahrzeug (40), ermittelt wird.

6. Vorrichtung nach Anspruch 4 oder 5,
**dadurch gekennzeichnet, dass** bei der Ermittlung, insbesondere der Berechnung, des ersten Belastungswerts (F_{Lv}) ein erster Korrekturfaktor, insbesondere zur Berücksichtigung von Reibungskräften, verwendet wird und/oder dass bei der Ermittlung, insbesondere der Berechnung, des zweiten Belastungswerts (a_{Lh}) ein zweiter Korrekturfaktor, insbesondere zur Berücksichtigung von Reibungskräften, verwendet wird.

7. Vorrichtung nach Anspruch 6,
**dadurch gekennzeichnet, dass** der erste Korrekturfaktor aus einem Vergleich von einem tatsächlich aufgrund des Anhebens der mindestens einen Achse (41) des Havaristenfahrzeugs (40) am Unterfahrlift (20) anliegenden ersten Realbelastungswert und dem ohne Korrekturfaktor ermittelten, insbesondere berechneten, ersten Belastungswert (F_{Lv}) bestimmt ist und/oder dass der zweite Korrekturfaktor aus einem Vergleich von einem tatsächlich aufgrund des Anhebens der mindestens einen Achse (41) des Havaristenfahrzeugs (40) am Unterfahrlift (20) anliegenden zweiten Realbelastungswert und dem ohne Korrekturfaktor ermittelten, insbesondere berechneten, zweiten Belastungswert (a_{Lh}) bestimmt ist.

8. Vorrichtung nach einem der Ansprüche 1 bis 7,
**dadurch gekennzeichnet, dass** die Vorrichtung (1) mindestens zwei Kraftermittlungssensoren (3, 4) zur Ermittlung von inneren Kräften (F_{Z1}, F_{Z2}) des Unterfahrlifts (20) und mindestens zwei Geometriesensoren (5, 6) zur Ermittlung der geometrischen Anordnung der mehreren Bauteile (21, 22, 23) zueinander aufweist, und inbesondere dass die inneren Kräfte (F_{Z1}, F_{Z2}) und die geometrische Anordnung bei der Ermittlung des ersten Belastungswerts (F_{Lv}) und des zweiten Belastungswerts (a_{Lh}) verwendet werden.

9. Vorrichtung nach einem der Ansprüche 1 bis 8,
**dadurch gekennzeichnet, dass** die Vorrichtung (1) mindestens einen Neigungssensor (7) umfasst, dass die Neigung (τ) des Unterfahrlifts (20), insbesondere des Bergefahrzeugs (30), mittels des mindestens einen Neigungssensors (7) ermittelt wird, und insbesondere dass die Neigung (τ) bei der Ermittlung, insbesondere Berechnung, des ersten Belastungswerts (F_{Lv}) und des zweiten Belastungswerts (a_{Lh}) verwendet wird.

10. Vorrichtung nach einem der Ansprüche 1 bis 9,
**dadurch gekennzeichnet, dass** der erste Belastungswert (F_{Lv}) und der zweite Belastungswert (a_{Lh}) in einem statischen Zustand des Unterfahrlifts (20) ermittelt ist.

11. Vorrichtung nach einem der Ansprüche 1 bis 10,
**dadurch gekennzeichnet, dass** die Vorrichtung (1) ein Anzeigeelement (8) umfasst, und dass die Information mittels des Anzeigeelements (8) angezeigt wird.

12. Vorrichtung nach einem der Ansprüche 1 bis 11,
**dadurch gekennzeichnet, dass** die Information der erste Belastungswert (F_{Lv}) und der zweite Belastungswert (a_{Lh}) selbst sind.

13. Vorrichtung nach einem der Ansprüche 1 bis 12,
**dadurch gekennzeichnet, dass** der Unterfahrlift (20) mindestens eine Kraftmaschine (24, 25, 26) zum Anheben der mindestens einen Achse (41) des Havaristenfahrzeugs (40) aufweist, und dass die Steuereinheit (2) zur Steuerung der mindestens einen Kraftmaschine (24, 25, 26) vorgesehen ist.

14. Verfahren zum Betrieb eines an einem Bergefahrzeug (30) angeordneten Unterfahrlifts (20), wobei mittels des Unterfahrlifts (20) mindestens eine Achse (41) des Havaristenfahrzeugs (40) angehoben wird,
**dadurch gekennzeichnet, dass** beim Anheben der mindestens einen Achse (41) des Havaristenfahrzeugs (40) durch den Unterfahrlift (20) ein erster Belastungswert (F_{Lv}) und ein zweiter Belastungswert (a_{Lh}) für die Belastung des Unterfahrlifts durch das Anheben der mindestens einen Achse (41) des Havaristenfahrzeugs (40) ermittelt werden, und dass der erste Belastungswert (F_{Lv}) und der zweite Belastungswert (a_{Lh}) beim weiteren Bergevorgang des Havaristenfahrzeugs (40) verwendet werden.

15. Verfahren nach Anspruch 13,
**dadurch gekennzeichnet, dass** der erste Belastungswert (F_{Lv}) und der zweite Belastungswert (a_{Lh}) dazu verwendet werden, die Zulässigkeit und/oder das Risiko der Bergung des Havaristenfahrzeugs (40), insbesondere bezüglich der Strukturfestigkeit des Unterfahrlifts (20) und/oder seiner Verbindung zum Bergefahrzeug (30) und/oder der maximalen Achslast des Bergefahrzeugs (30), einzuschätzen und/oder dass der erste Belastungswert (F_{Lv}) und der zweite Belastungswert (a_{Lh}) dazu verwendet werden die bezüglich der Sicherheit maximal zulässige Geschwindigkeit des Bergefahrzeugs (30) beim Bergen des Havaristenfahrzeugs (40) zu bestimmen.
